(19) Europäisches Patentamt
European Patent Office
Office européen des brevets

(11) **EP 2 767 361 B1**

(12) **EUROPEAN PATENT SPECIFICATION**

(45) Date of publication and mention
of the grant of the patent:
**04.01.2017 Bulletin 2017/01**

(51) Int Cl.:
*B23K 9/18* *(2006.01)*    *B23K 35/362* *(2006.01)*
*B23K 35/30* *(2006.01)*    *C22C 38/00* *(2006.01)*
*C22C 38/14* *(2006.01)*    *C22C 38/12* *(2006.01)*
*C22C 38/02* *(2006.01)*    *C22C 38/04* *(2006.01)*
*B23K 35/36* *(2006.01)*    *B23K 9/23* *(2006.01)*
*C22C 38/08* *(2006.01)*

(21) Application number: **12849423.4**

(22) Date of filing: **14.11.2012**

(86) International application number:
**PCT/JP2012/079492**

(87) International publication number:
**WO 2013/073565 (23.05.2013 Gazette 2013/21)**

(54) **METHOD FOR HIGH-EFFICIENCY WELDING OF THICK STEEL PLATES**

VERFAHREN FÜR HOCHEFFIZIENTES SCHWEISSEN DICKER STAHLPLATTEN

PROCÉDÉ DE SOUDAGE TRÈS EFFICACE DE PLAQUES EN ACIER ÉPAISSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2011 JP 2011249928**

(43) Date of publication of application:
**20.08.2014 Bulletin 2014/34**

(73) Proprietor: **Nippon Steel & Sumitomo Metal Corporation**
**Tokyo 100-8071 (JP)**

(72) Inventors:
• **KOJIMA, Kazuhiro**
**Tokyo 100-8071 (JP)**
• **NOSE, Tetsuro**
**Tokyo 100-8071 (JP)**
• **INOUE, Hiroshige**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
JP-A- S6 245 475    JP-A- S6 245 475
JP-A- H02 258 191    JP-A- 2000 042 741
JP-A- 2006 007 313    JP-A- 2011 200 920
JP-B- 6 073 757

## Description

[Technical Field]

The present invention relates to a welding technology such as that allows for efficient welding of the base of the wind power generation facilities installed in cold areas.

Priority is claimed on Japanese Patent Application No. 2011-249928, filed in Japan on November 15, 2011, the content of which is incorporated herein by reference.

[Background Art]

In order to diversify the ways of supplying energy, a variety of researches are carried out recently in the field of renewable energy. In wind power generation, which is one of the most promising candidates, large facilities with the capacity of generating more electric power attract attention. With the upsizing of the facilities, use of steel plates with a plate thickness of approximately 50 mm to 75 mm in the base of a wind mill is to be installed is under study, because the base is required to support the weight of the facility. With this being the situation, further use of steel plates which are extremely thick, specifically, ultraheavy steel plates with a thickness of approximately 100 mm may be feasible in the future. The level of the strength (tensile strength) of steel plates for wind power generation is typically 400 MPa or higher and 700 MPa or lower. Steels with a tensile strength of 450 MPa or higher and 650 MPa or lower are often used, and especially, steel plates with a tensile strength of 480 MPa or higher and 620 MPa or lower are often used.

Whether wind power generation enters widespread use in the future or not depends on economic rationality. From this point of view, reduction in the costs of the base building of wind power facilities is also an important factor. Also in the field of welding, there is a demand of welding the steel plates with high efficiency.

As one of the methods of welding steel plates with high efficiency, high heat input welding is known. However, in the high heat input welding, it is often difficult to secure the toughness of the weld metal. In addition, the locations where wind power generation facilities are installed may be in cold areas such as the offshore areas in Europe. Therefore, weld metal is required to have low temperature toughness.

Accordingly, in order to satisfy the aforementioned social needs, a welding technology is required that is capable of obtaining weld metal so excellent in toughness as to withstand the operation in cold areas even though steel plates with a thickness of over 50 mm are subjected to high heat input welding.

As conventional technologies of subjecting steel plates to high heat input welding, those as follows are known.

For example, Patent Document 1 discloses a method of submerged arc welding that is capable of welding steel plates with a thickness of 70 mm in a one-side single layer.

However, because this method offers one-side welding, the cross-sectional area of the groove is very large and the welding heat input is very high at 780 kJ/cm. Patent Document 1 does not disclose the toughness of the weld metal. However, in view of the fact that the method is for building use, the toughness is considered to correspond to that at 0°C, and hence, the method is not estimated to be suitable for use in cold areas.

In Patent Document 2, the high heat input submerged arc welding is also done with its target being box-shaped pillars in the building operation. However, the Charpy test on the weld metal is evaluated only at -5°C. In addition, because the welding is one-side welding similarly to Patent Document 1, it is estimated that heat input is excessive.

In order to secure the toughness of weld metal, it is effective to make the cross-sectional area of a groove as small as possible, to thereby eliminate unnecessarily high heat input. In order to suppress the cross-sectional area of a groove, machining the groove from the front and back sides of the steel as is the case with the double V groove makes it possible to suppress the cross-sectional area of the groove more than machining a groove from a one side.

As the technologies related to this double-side single layer welding method by use of the double V groove, the followings are known.

For example, Patent Document 3 discloses, in a manufacturing method of welded steel pipes by use of the double-side single layer welding, the result of the investigation of the welding for plate thicknesses up to 38 mm. However, knowledge about the welding of ultraheavy steel plates such as those used for wind power generation is not described.

In Patent Document 4, welding is examined in the case of a plate thickness of 50 mm in the double-side single layer welding. However, use of steel plates with a plate thickness of over 50 mm is contemplated in the wind power generation. Therefore, Patent Document 4 also provides insufficient knowledge.

Patent Document 5 says that it will disclose a technology capable of doing double-side single layer welding on steel plates with a plate thickness of 30 mm or greater. However, the knowledge actually offered by the examination in Examples is that of plate thicknesses up to 31.8 mm. This is not the knowledge applicable to the field of wind power generation.

Even in the case of doing the double-side single layer welding in the double V groove, knowledge applicable to the social needs directed to the wind power generation is not disclosed.

Here, the description is made for the case of large structures. Therefore, electron beam welding is excluded in view of the capacity of vacuum chambers.

As has been shown above, a method has not been disclosed that welds steel plates with a plate thickness of over 50 mm highly effectively in a one-side single layer welding or a double-side single layer welding and is also effective for obtaining highly tough weld metal capable of withstanding use in cold areas.

However, recently in the field of the submerged arc welding, there is developed a high capacity digitally controlled AC/DC welding power supply, as shown in Patent Document 6, that controls the waveforms of the welding current, to thereby make it possible to increase a deposit amount (wire feed speed) even with the same welding current. Furthermore, there is developed a technology of submerged arc welding by use of this power supply.

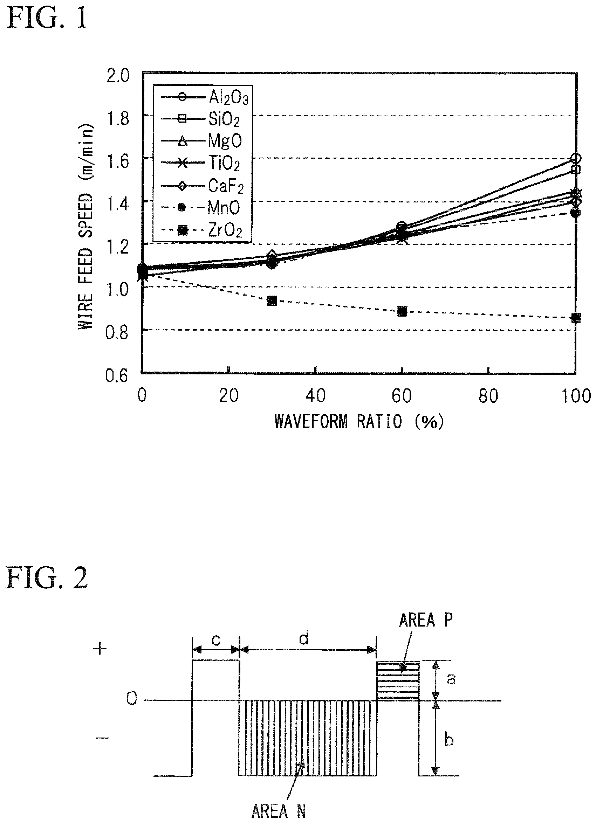

FIG. 2 shows an example of waveform of a square wave alternating welding current that is output from this power supply. The welding current has positive magnitudes and negative magnitudes. The positive polarity (reversed polarity) controls the depth of weld penetration of welding while the negative polarity (normal polarity) controls the deposit amount.

In this welding supply, four parameters of the current waveform, namely, amplitudes a, b and widths (cycles) c, d are independently modified. With the modifications in amplitude of the positive magnitudes and the negative magnitudes, it is possible to adjust the depth of weld penetration or the deposit amount.

If by use of the welding current whose waveform is controlled, the wire feed speed can be made faster with the same welding current, then it is possible to supply an amount of weld metal necessary for filling the cross-sectional area of a groove with less current. This results in reduced welding heat input, which is expected to advantageously work in order to secure the toughness of weld metal.

As the knowledge of controlling the welding current waveform by use of the power supply as described above, for example Patent Document 7 may be listed. Patent Document 7 discloses a one-layer one-run welding on the assumption that the multipass welding is used. However, this is not a welding method of highly efficiently welding ultraheavy steel plates by the high heat input welding. Therefore, from Patent Document 7, it is not possible to obtain knowledge capable of drastically improving the efficiency of welding ultraheavy steel plates such as are used for the wind power generation.

Furthermore, in the case where by use of a welding supply capable of controlling the output waveforms, the double V groove in steel plates such as with a plate thickness of over 50 mm is subjected to multi electrode submerged arc welding so as to thereby weld each of the groove in a one run only in a single layer, namely, weld a one side in a one run, it is not known what welding materials and what welding conditions are favorably used from the viewpoint of improving the wire feed speed to suppress an amount of heat input.

[Citation List]

[Patent Documents]

[Patent Document 1] Japanese Unexamined Patent Application, First Publication No. H09-206946
[Patent Document 2] Japanese Unexamined Patent Application, First Publication No. H09-277083
[Patent Document 3] Japanese Unexamined Patent Application, First Publication No. 2009-241128
[Patent Document 4] Japanese Unexamined Patent Application, First Publication No. 2009-195957
[Patent Document 5] Japanese Unexamined Patent Application, First Publication No. 2004-143556
[Patent Document 6] Japanese Unexamined Patent Application, First Publication No. 2005-193299
[Patent Document 7] Japanese Unexamined Patent Application, First Publication No. 2011-200920

JP S62-045475 discloses a both side one layer submerged arc welding method for thick plates.

[Summary of the Invention]

[Problems to be Solved by the Invention]

Therefore, it is an object of the present invention to provide a submerged arc welding method that, by use of a welding supply capable of controlling an output waveform, is capable of highly efficiently welding a double V groove of a steel plate and is capable of obtaining weld metal excellent in toughness even in low temperature use.

[Means for Solving the Problem]

The present inventors examined welding conditions that make the wire feed speed faster with the same welding current in the case where a welding supply capable of controlling the output waveforms is used to weld a groove in a one run by the multi electrode submerged arc welding.

In that process, the examination is conducted especially focused on the composition of flux and the waveforms of the welding current applied to the first electrode and the second and subsequent electrodes. As a result, the present inventors have found that, with the optimal combinations of these, the above object can be achieved.

Namely, the scope of the present invention with preferred embodiments is shown as follows.

(1) A method of a submerged arc welding according to a first aspect of the present invention includes: a machining step of machining a double V groove in a pair of steels with a plate thickness of over 50 mm and 100 mm or less; and a welding step of performing a one run welding with a flux on the pair of steels from a front surface and a rear surface by multi electrode submerged arc welding using two or more electrodes and six or less electrodes, wherein, in the welding step, a welding current for a first electrode is an alternating current with a waveform ratio of 60% or greater and 90% or less, and welding currents for the other electrodes are an alternating current with a waveform ratio of 70% or greater, or a negative direct current, and wherein the flux consists of, in a mass ratio to a total mass of the flux: $Al_2O_3$: 10% or greater and 50% or less; and $SiO_2$: 16% or greater and 30% or less, and further includes: one or more of MgO, $TiO_2$, $CaF_2$, and MnO, a total of which is 10% or greater and 60% or less, the MgO being limited to 40% or less, the $TiO_2$ being limited to 20% or less, the $CaF_2$ being limited to 30% or less, and the MnO being limited to 20% or less, and optionally metal powder(s) of Si, Mn, Al, Ti, Mo, Cu, Ni, Cr or V, and further optionally iron power.

(2) In the method of the submerged arc welding as set forth above in (1), the welding current for the first electrode may be 2500 A or higher.

(3) In the method of the submerged arc welding as set forth above in (1) or (2), as profiles of a plurality of grooves formed between the pair of steels, a height of a root face may be 5 mm or greater, and may be 25% or less of the plate thickness.

(4) In the method of the submerged arc welding as set forth above in (3), a groove angle of the double V groove may be 30° or greater and 50° or less.

(5) In the method of the submerged arc welding as set forth above in (1) or (2), a groove angle of the double V groove may be 30° or greater and 50° or less.

[Effects of the Invention]

According to the aspects as set forth above in (1) to (5), it is possible to highly efficiently weld a double V groove of a steel plate and to obtain weld metal excellent in toughness even in low temperature use. Therefore, it is possible to efficiently manufacture the base of wind power generation facilities in cold areas, and contributing significantly to the proliferation of renewable energy.

[Brief Description of the Drawings]

FIG. 1 is a diagram showing an influence of a composition of flux on a wire feed speed.

FIG. 2 is a schematic diagram of a waveform of a welding current and the waveform ratio thereof.

FIG. 3 is a diagram showing an influence of $Al_2O_3$ content in the flux components on a wire feed speed and Charpy absorbed energy.

FIG. 4 is a diagram showing an influence of $SiO_2$ content in the flux components on a wire feed speed and Charpy absorbed energy.

FIG. 5 is a diagram showing an influence of a flux composition ($Al_2O_3$ content of 38%) on a wire feed speed.

FIG. 6A is a diagram showing weld penetration profiles of weld metal. It is an example in which incomplete fusion occurred with a positive direct current being applied to the first electrode.

FIG. 6B is a diagram showing weld penetration profiles of weld metal. It is an example in which incomplete fusion is avoided with the waveform ratio of the first electrode being 60%.

FIG. 7 is a diagram showing a relationship between a waveform ratio of a first electrode on a six electrode welding system and an incidence of incomplete fusion.

FIG. 8 is a diagram showing a relationship between a waveform ratio of a first electrode on a four electrode welding system and an incidence of incomplete fusion.

FIG. 9 is a diagram showing a relationship between a waveform ratio of a first electrode on a two electrode welding system and an incidence of incomplete fusion.

FIG. 10 is a diagram showing a profile of a groove in a steel plate with a plate thickness of 100 mm.

FIG. 11 is a diagram showing a waveform ratio of a second electrode to a sixth electrode on a six electrode welding system and an incidence of underfill.

FIG. 12 is a diagram showing waveform ratio of a second electrode to a fourth electrode on a four electrode welding system and an incidence of underfill.

FIG. 13 is a diagram showing a waveform ratio of a second electrode on a two electrode welding system and an incidence of underfill.

FIG. 14 is a diagram showing a profile of a groove in a steel plate with a plate thickness of 70 mm.

FIG. 15 is a diagram showing a profile of a groove in a steel plate with a plate thickness of 60 mm.

FIG. 16 is a diagram showing a profile of a groove in a steel plate with a plate thickness of 55 mm.

FIG. 17 is a diagram showing a profile of a groove in a steel plate with a plate thickness of 50 mm.

FIG. 18 is a diagram showing a profile of a groove in a steel plate with a plate thickness of 110 mm.

FIG. 19 is a diagram for explaining the positions to take a test specimen.

FIG. 20 is a diagram for explaining the arrangement of the electrodes.

[Description of Embodiments]

The present inventors searched for conditions that makes the wire feed speed faster with the same welding current, in the case where, by use of a welding supply capable of controlling an output waveform, a double V groove in a steel plate is welded, with the multi electrode submerged arc welding (hereinafter, submerged arc welding is abbreviated to SAW) being performed on the grooves in the front and rear surfaces each in a one run. The present inventors focused especially on the components of flux and on the waveform of the welding current applied to a first electrode 1, and searched for conditions for each of these.

Firstly, conditions for the flux components will be described.

The present inventors made experimental examination concerning the components of a flux in the following manner.

A flux for SAW is formed by mixing various types of material such as oxides and fluorides. In order to determine the materials, which is most effective to increase the wire feed speed, among these flux components, each fluxes, which are made from one material respectively, were put under experiment and their influences on the wire feed speed were researched.

The submerged arc welding is performed by use of a square wave alternating welding current as shown in FIG. 2. The results are shown in FIG. 1. The waveform ratio used in FIG. 1 refers to an area ratio between an area in the positive and an area in the negative of the alternating current as shown by Formula 1 and in FIG. 2. The area ratio is presented by converting the value calculated by $N/(N+P)$ to percentage, where the area in the positive is P and the area in the negative is N. A waveform ratio of 0% signifies a positive direct current while a waveform ratio of 100% signifies a negative direct current.

$$\text{Waveform ratio} = \text{area } N/(\text{area } N + \text{area } P) \cdots \text{Formula (1)}$$

The results in FIG. 1 show that, of the flux components used in the experiment, $Al_2O_3$ and $SiO_2$ are especially more effective in increasing the wire feed speed than other components. Furthermore, it has been concluded that MgO, $TiO_2$ $CaF_2$, and MnO also has a similar effect. Contrary to this, $ZrO_2$ led to a reduction of wire feed speed.

With an increase in wire feed speed, it is possible to suppress a current for obtaining the deposit metal that fills the groove. Therefore, an increase of wire feed speed can be utilized to reduce a welding heat input. From the above results, it has been found that, as a design guide of a flux for increasing a wire feed speed so as to increase an deposit amount, the flux contains $Al_2O_3$ and $SiO_2$ as essential components and optionally contains MgO, $TiO_2$, $CaF_2$, and MnO.

Furthermore, the amount of each component has been examined, and is determined as follows.

As for the amounts of $Al_2O_3$ and $SiO_2$ as essential materials, the amount of $Al_2O_3$ is 10% or greater and 50% or less, and the amount of $SiO_2$ is 16% or greater and 30% or less in terms of mass% relative to the whole mass of the flux (hereinafter, the components of the flux are all expressed in mass% relative to the whole mass of the flux.).

The lower limit values of 10% and 16% respectively for $Al_2O_3$ and $SiO_2$ were determined on the grounds that, with the contents less than these, the effects of increasing the wire feed speed did not explicitly manifest itself. In order to improve the wire feed speed, the lower limit of $Al_2O_3$ may be 15%, 20%, 25%, or 30%, and the lower limit of $SiO_2$ may be 18% or 20%. The upper limit value of $Al_2O_3$ is set to 50% because, when the content thereof is greater than 50%, it is resulted in an excessive amount of Al in weld metal 8 and it is impossible to secure a low temperature toughness. So as to improve a low temperature toughness, the upper limit thereof may be limited to 47%, 45%, or 40%. The upper limit value of $SiO_2$ is set to 30% because, when the content thereof is greater than 30%, it is resulted in an excessive amount of oxygen in the weld metal 8 and it is difficult to secure the low temperature toughness. So as to improve a low temperature toughness, the upper limit thereof may be limited to 28% or 26%.

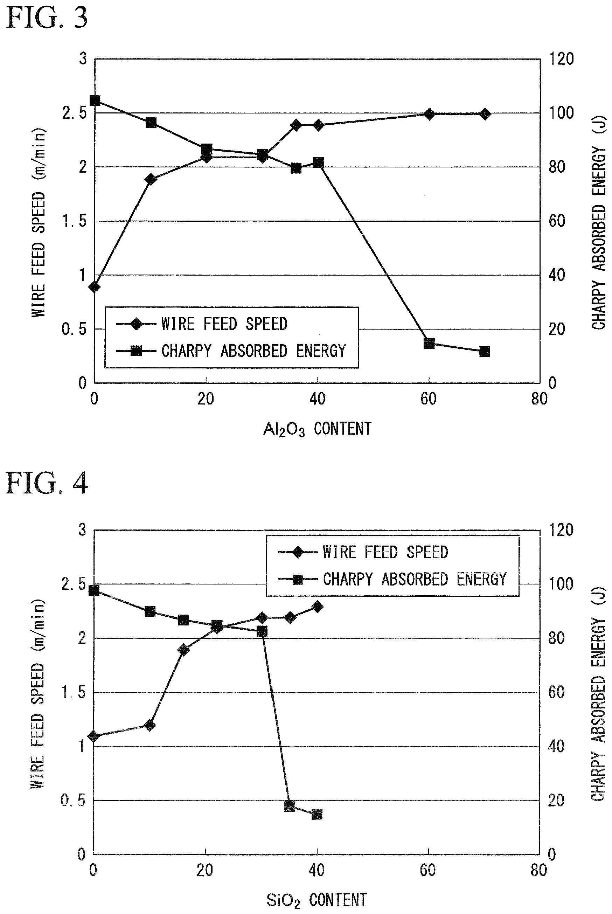

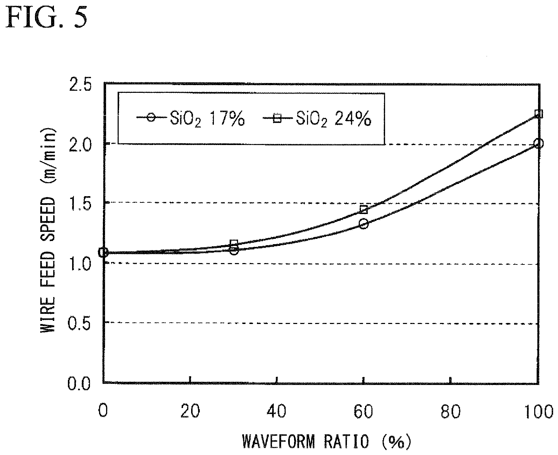

From FIG. 3 and FIG. 4, within the above ranges of the amounts of $Al_2O_3$ and $SiO_2$, when $Al_2O_3$ content is 36% or greater, it is further enhanced the function of increasing the wire feed speed, and hence, is preferable. When $SiO_2$ is included 22% or greater in a flux, due to the combined action of $Al_2O_3$ and $SiO_2$, the effect of improving the wire feed speed is more significant in the case of an elevated waveform ratio, and hence, it is more preferable. FIG. 5 shows the results of an experiment about this combined action of $Al_2O_3$ and $SiO_2$ in the effect of improving the wire feed speed when $Al_2O_3$ content is 38%. In order to increase the wire feed speed, a total amount of $Al_2O_3$ and $SiO_2$ may be limited to 30% or greater and 80% or less. In order to further increase the wire feed speed, the lower limit of the total amount of $Al_2O_3$ and $SiO_2$ may be 35%, 40%, or 45%, and the upper limit of the total amount thereof may be 75%, 70%, or 68%.

The flux used in the present invention is required to contain $Al_2O_3$ and $SiO_2$, and further contain, as optional materials, one or more of MgO, Ti02, $CaF_2$, and MnO, with the total amount of the optional materials being in the range of 10% or greater and 60% or less, in the range with MgO: 40% or less, $TiO_2$: 20% or less, $CaF_2$: 30% or less, and MnO: 20% or less, optionally metal powder(s) of Si, Mn, Al, Ti, Mo, Cu, Ni, Cr or V; and further optionally iron power.

Compared with $Al_2O_3$ and $SiO_2$, these materials are less effective in improving the wire feed speed. However, they do not have an adverse influence of decreasing the wire feed speed, as is the case with $ZrO_2$, in the case where the waveform ratio is made high. From the viewpoint of optimizing the fluidity and viscosity of the slag, they are required to be contained in appropriate amounts. From the viewpoint of optimizing the fluidity and viscosity of the slag, the lower limit of the total amount of these optional materials may be 13%, 15%, or 20%, and the upper limit of the total amount thereof may be 55%, 50%, or 45%.

When MgO content is greater than 40%, the viscosity of the slag is low. This makes it likely to produce undercuts. Therefore, the upper limit of MgO content is set to 40% or less. To make it less likely to produce undercuts, the upper limit of MgO content may be limited to 30%, 25%, or 20%. Excessive $TiO_2$ content and MnO content deteriorate the toughness of the weld metal 8. Therefore, for both of $TiO_2$ and MnO, the upper limit of the content is determined to be 20% or less. So as to improve the toughness of the weld metal 8, the upper limits of $TiO_2$ and MnO may be limited to 15% or 10%. An excessive $CaF_2$ content leads to the unstable arc and makes making the possibility of occurrence of incomplete fusion higher. Therefore, the upper limit of $CaF_2$ is determined to be 30% or less. So as to prevent incomplete fusion, the upper limit of $CaF_2$ may be limited to 25%, 20%, or 15%.

When the total amount of these optional materials is less than 10%, the manifestation of the effect of optimizing the fluidity and viscosity of the slag is not cleat, and then undercuts are likely produced. Therefore, the lower limit the total amount of these optional materials is set to 10%. To prevent undercuts, the total amount of the optional materials may be 13% or greater, 16% or greater, or 20% or greater. When the total amount of the optional materials is greater than 60%, the arc is unstable and incomplete fusion is likely produced. Therefore, the total amount the total amount of these optional materials is set to 60% or less. To prevent incomplete fusion, the total amount of the optional materials may be limited to 55% or less, 50% or less, or 45% or less.

In the present invention, the other components of the flux are not particularly limited. The components typically used for a flux for SAW may be appropriately contained.

For example, there are cases where metal powder(s) of Si, Mn, Al, Ti, Mo, Cu, Ni, Cr, V, or the like are contained in the flux with a view to adjusting the composition of the weld metal 8. It is possible to appropriately adjust the amounts of these metal powders with reference to the aforementioned Patent Documents and so on. It is also possible for the flux to contain an iron powder with a view to increasing a deposit amount and stabilizing the arc. It is preferable that the amount of the iron powder in that case be 10% or greater and 40% or less. With an addition thereof in large quantities, the arc is likely to be unstable and the arc is likely to be lost during welding. Therefore, the upper limit of the amount thereof may be 30%, 20%, or 15% or less as required.

Subsequently, the conditions for power supply will be described.

In the case where a high capacity digitally controlled DC/AC welding supply as described in Patent Document 6 is used to perform the submerged arc welding (SAW) on a multi electrode welding system, it is possible to independently control the waveform of the welding currents of the electrodes 7. However, in a one-run welding on a multi electrode welding system, weld penetration by the first electrode 1 is important. Therefore, the conditions for the current applied to the first electrode 1 were examined.

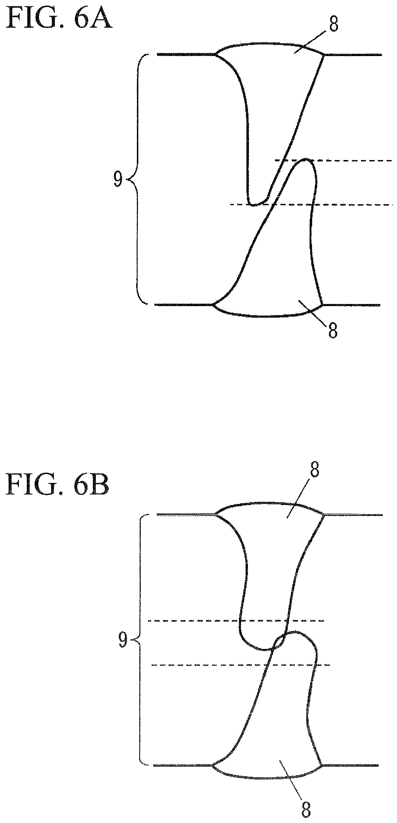

Patent Document 6 describes an example in which the direct current is used for the first electrode 1 in order to obtain a required weld penetration depth. Therefore, FIG. 6A shows the resultant weld penetration profiles of weld metal 8 that were obtained from the double-side one-run SAW performed on the double V groove with the positive direct current being applied to the first electrode 1. The groove angle is 30° from the viewpoint of suppressing heat input. There were cases where the arc was disturbed from the influence by the remaining magnetism of the steel, and some cases were noticed where the centers of the weld penetration profiles in the front surface and rear surface of the weld metal 8 were not aligned. Furthermore, from the viewpoint of the weld penetration profile of the weld metal 8, it is noticed that because the bottom of the weld metal 8 is too narrow, there is a high possibility of incomplete fusion with only a slight misalignment between the centers of the weld penetrations. Accordingly, this method is considered to be effective in the case of a one-side welding that requires a deep weld penetration. Application of this method to a double-side welding with the double V groove is difficult, and is not practical.

On the other hand, FIG. 6B shows the weld penetration profiles of the weld metal 8 in the case where the alternating welding current whose waveform ratio between the positive magnitude and the negative magnitude is 60% is applied to the first electrode 1. The weld penetration depth in this case is less than that in the case where the positive direct current is applied to the first electrode 1. However, even when the bead width is wider and the centers of the weld metal 8 on both sides are misaligned, incomplete fusion is unlikely occurred. Therefore, it is found that this waveform control is favorable. Note that, with the application of the negative direct current to the first electrode 1, there are cases of the unstable arc due to an influence of high remaining magnetism. Therefore, the application of the negative direct current is not within the scope of the present invention.

From the above reasons, it is preferable that the waveform of the welding current for the first electrode 1 have an effect of improving the wire feed speed and be capable of easily avoiding incomplete fusion even in narrow gaps. As a condition for this, an alternating current whose waveform ratio is 60% or greater and 90% or less is used. To prevent incomplete fusion, the lower limit of the waveform ratio may be 65%, 68%, or 71%, and the upper limit of the waveform ratio may be 85%, 82%, or 78%.

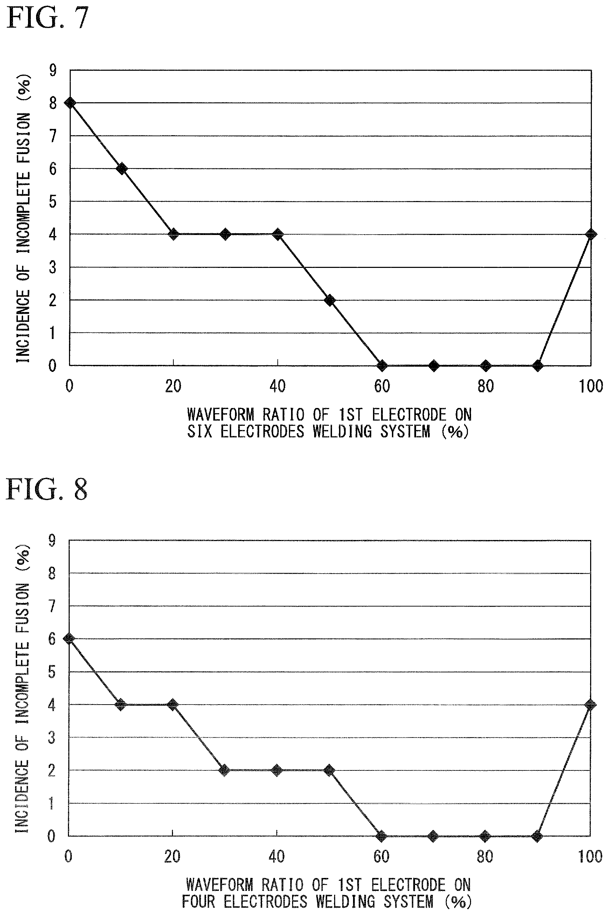

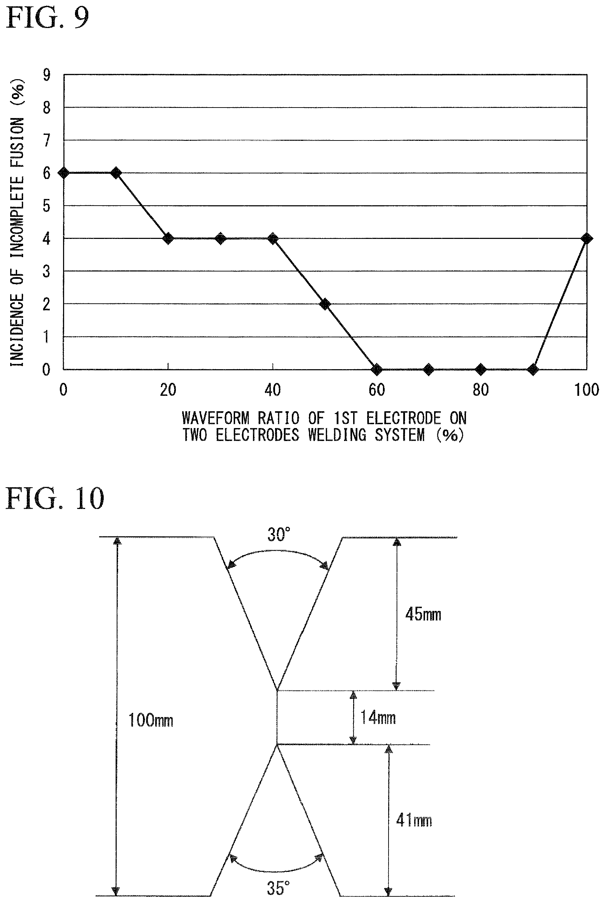

The data obtained from examining this in further detail is shown in FIG. 7 to FIG. 9. To a groove of FIG. 10, the arc is created with the conditions for the first electrode 1 being 2500 A, 35 V and for the second electrode 2 and the subsequent electrodes being 1500 A, 40 V, with the waveform ratio being fixed to 90%, and the welding speed being 50 cm/minute. With the waveform ratio of the first electrode 1 being varied, a weld length of 5 m is fabricated. Fifty macroscopic cross-sectional specimens are cut out at every 10 cm, and are checked for incomplete fusion on the root face (root surface). The evaluation is made in the following manner. If one incomplete fusion is found out of 50 macroscopic cross-sectional surfaces, it is evaluated as 1/50 and an incidence of incomplete fusion of 2%.

From FIG. 7 to FIG. 9, in any of the two electrode welding system, four electrode welding system, and six electrode welding system, the waveform ratio of the first electrode 1 is 60% or greater and 90% or less. Therefore, it is verified that the incidence of incomplete fusion is suppressed.

Furthermore, the second electrode 2 and the subsequent electrodes do not have a marked influence on the weld penetration profile of the weld metal 8. As for these electrodes, considering improvement of wire feed speed will suffice. Therefore, the waveform ratio is set to 70% or greater (including the negative direct current with a waveform ratio of 100%) for all of the electrodes 7 from the second electrode 2 to the final one of the subsequent electrodes. In order to improve the wire feed speed, the waveform ratio may be 75% or greater, 80% or greater, or 85% or greater. From the viewpoint of securing the productivity (welding speed) to some degree and avoiding an excessive complexity of the facility structure, the number of electrodes used for welding is two or more and six or less. In order to make better use of the features of the present application, the number of electrodes may be three, four, or more, or the plate thickness of the steel may be 55 mm or greater, 60 mm or greater, or 65 mm or greater.

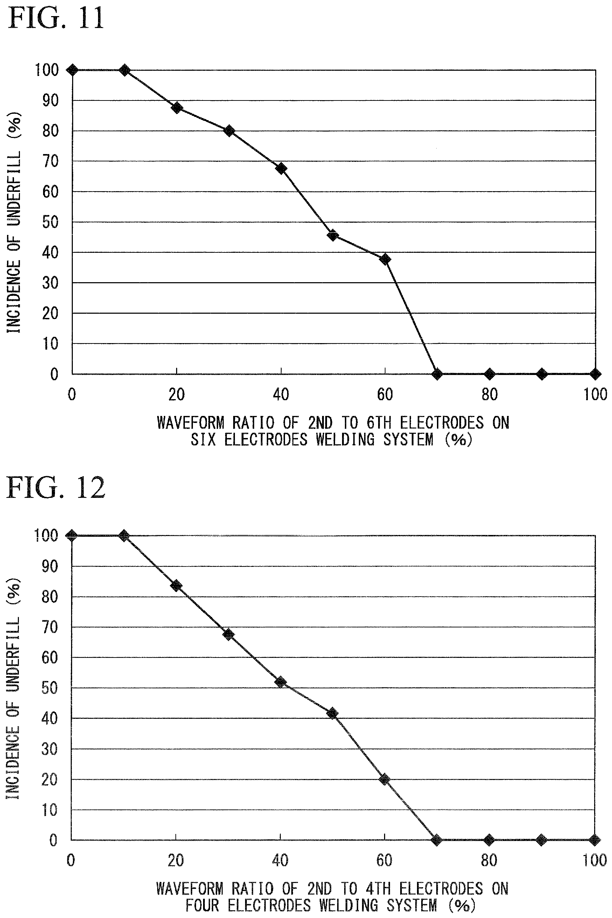

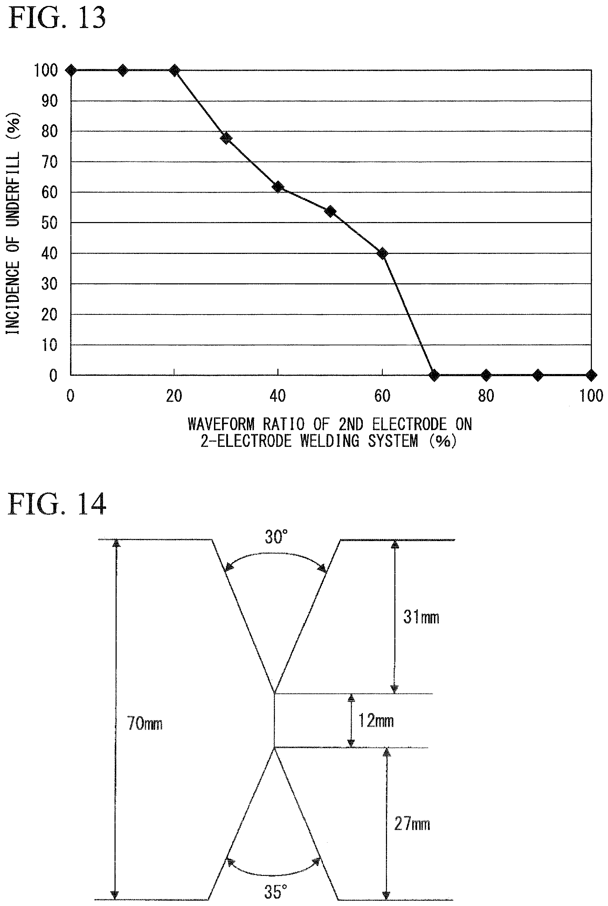

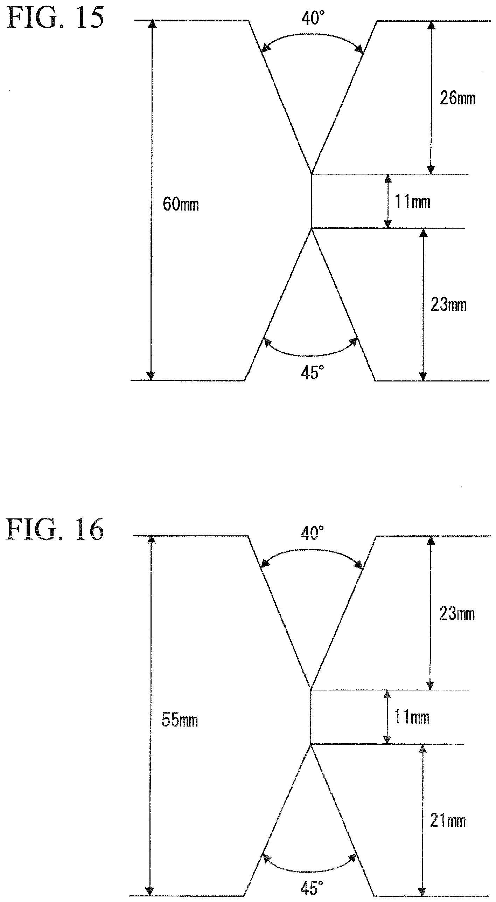

FIGS. 11 to 13 show the results of detailed examinations about the waveform ratios of the second electrode 2 and the subsequent electrodes. For the six electrode welding system, the groove of FIG. 10 is used. For the four electrode welding system, the groove of FIG. 14 is used. For the two electrode welding system, the groove of FIG. 15 is used. The welding conditions for the first electrode 1 was 2500 A, 35 V, and a waveform ratio of 70%. The welding conditions for the second electrode 2 and the subsequent electrodes are 1800 A, 40 V, with the waveform ratio being varied. The welding speed is 50 cm/minute. A weld length of 5 m is fabricated with the waveform ratio being varied similarly to the above. Fifty macroscopic cross-sectional surfaces are cut out at every 10 cm, and are checked for underfill. The estimation is made in terms of the ratio of the macroscopic test specimen where underfill is occurred. For example, if one underfill is found out of 50 macroscopic cross-sectional surfaces, it is estimated as the incidence of underfill of 2%. From FIGS. 11 to 13, the incidence of underfill decreases with an increase in waveform ratio. Therefore, it is verified that it is possible to obtain a required deposit amount without varying the heat input.

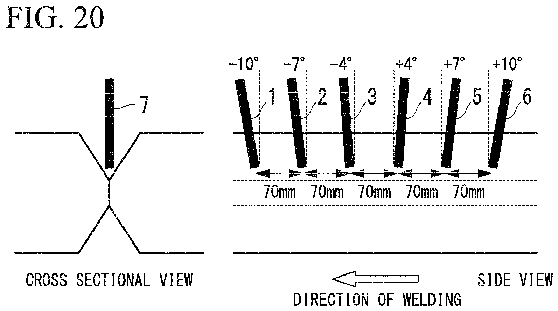

In the present invention, it is not particularly necessary to pose limitations to the space between, the arrangement of, the angles of, and the like of the electrodes 7 from the first electrode 1 to the second electrode 2 and the subsequent electrodes. In the aforementioned welding test, the electrodes 7 are arranged as shown in FIG. 20, in which the space between the electrodes 7 is 70 mm and the electrodes 7 are arranged along the central area of the groove width. The angle of the first electrode is a drag angle of 10°. The angle of the second electrode is a drag angle of 7°. The angle of the third electrode is a drag angle of 4°. The angle of the fourth electrode is a push angle of 4°. The angle of the fifth electrode is a push angle of 7°. The angle of the sixth electrode (final electrode) is a push angle of 10°.

The application range of the plate thickness of the steel of the present invention as described above is set to over 50 mm and 100 mm or less in consideration of the plate thickness of the steels used for the base of the wind power generator.

The effect of the present invention manifests itself especially in the welding of steels with a plate thickness of over 50 mm. Therefore, the lower limit of a plate thickness is set to over 50 mm. However, even when a plate thickness is over 100 mm, the application of the present invention is resulted in an excessive heat input, in failing to obtain the required toughness. Therefore, the upper limit of a plate thickness is set to 100 mm.

As profiles of a plurality of grooves formed between a pair of steels, the root face (to be more specific, the height of the root face) is preferably 5 mm or greater and 25% or less of the plate thickness. The reason is as follows. When a height is 5 mm or greater, offset may not be addressed from the viewpoint of machining accuracy. When the height is over 25% of the plate thickness, the root face is excessively large and leading to a high possibility of incomplete fusion. Here, the height of the root face refers to a height of the root face in the direction of plate thickness of the steel. For example, in FIG. 10, the root face has a height of 14 mm.

From the viewpoint of the suppression of heat input, the groove angle is preferably 30° or greater and 50° or less. The reason is as follows. When a narrow groove whose angle is less than 30°, the center of the welding bead width is likely to be displaced and it is difficult to obtain a sufficient weld penetration depth. On the other hand, when the angle is over 50°, the cross-sectional area of the groove becomes wide and the welding heat input becomes high, which is not favorable.

The modes defined in the present invention and the preferred modes have been described wherein a double V groove is machined in a pair of steels with a plate thickness of over 50 mm and 100 mm or less on which a one-run welding is performed from the front and rear surfaces by the multi electrode submerged arc welding. Hereunder is a further description of the operability and effect of the present invention through Examples.

[Examples]

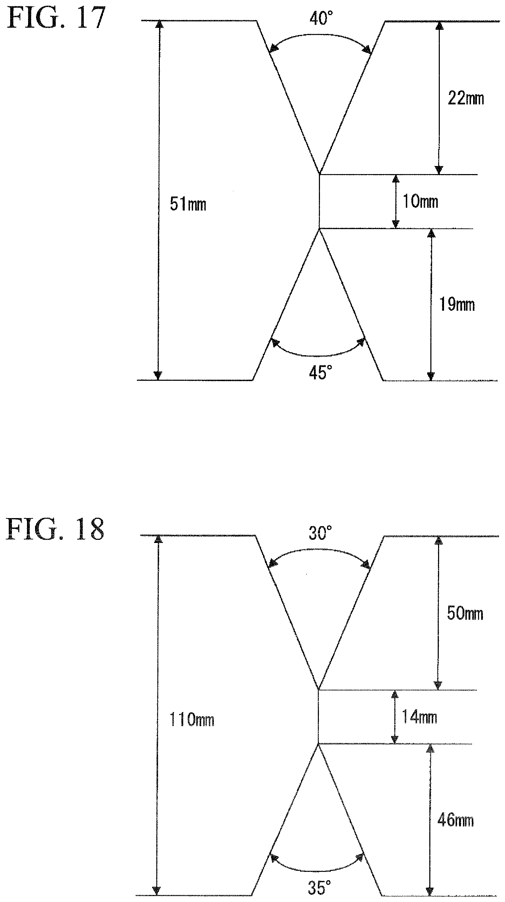

The chemical compositions of the steel and the welding wire offered for tests are shown in Table 1. The compositions of the fluxes are shown in Table 2. Zero in Table 2 denotes that the relevant element is not contained on purpose. The groove profiles of a pair of steels are shown in FIG. 10, and FIGS. 14 to 18. As for the welding of the pair of steels, a welding power supply capable of controlling the welding current was used to perform a one-run welding on both surfaces by the submerged arc welding on the two electrode welding system to six electrode welding systems. The welding conditions other than the waveform ratio are shown in Tables 3 to 8. The wavefortn ratios of the welding current for each of electrodes 7 are shown in FIGS. 9 to 13. Table 3 shows welding conditions for a plate thickness of 100 mm with 6 electrodes. Table 4 shows welding conditions for a plate thickness of 70 mm with 5 electrodes. Table 5 shows welding conditions for a plate thickness of 60 mm with 4 electrodes. Table 6 shows welding conditions for a plate thickness of 55 mm with 3 electrodes. Table 7 shows welding conditions for a plate thickness of 51 mm with 2 electrodes. Table 8 shows welding conditions for a plate thickness of 110 mm with 6 electrodes.

As for the angles of each of the electrodes 7, a drag angle of 10° was adopted for the first electrode 1 in order to secure the weld penetration, and a push angle of 10° was adopted for the final electrode in order to secure the bead appearance. The space between the electrodes was determined so as to optimize the pool amount of melted metal, and 70 mm was adopted as the space between the electrodes. The electrodes 7 were arranged at the central area of the groove width.

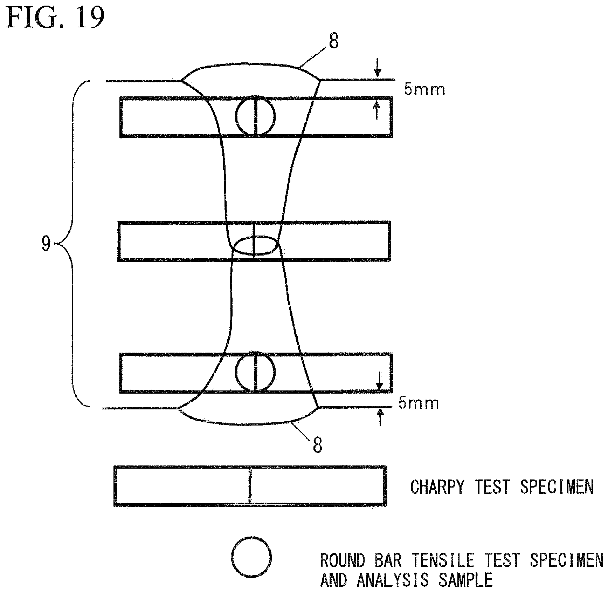

Pieces of the fabricated weld metal 8 were cut out at the positions of FIG. 19. The pieces were machined into composition analysis samples, into round bar tensile test specimens in A1 of JIS Z 3111 (diameter: 12.5 mm, gauge length (GL): 50 mm), and V-notch test specimens in JIS Z 2242 (10 mm full sized test specimens). Then, the machined pieces were subjected to the tests. The results of the evaluations of these based on the good/not good criteria of Table 14 are shown in Table 15 to Table 19. The temperature for the Charpy impact test was at -40°C.

In test Nos. 100-1 to 100-37, test Nos. 70-1 to 70-37, test Nos. 60-1 to 60-37, test Nos. 55-1 to 55-37, and test Nos. 51-1 to 51-37, which are Examples of the present invention, the results show that: the height of the excessive reinforcement of the bead was proper; no incomplete fusion was present; no undercut occurred; the strength and toughness of the weld metal 8 were favorable. Especially in test Nos. 100-3 to 100-6, test Nos. 100-15 to 100-18, test Nos. 100-27 to 100-30, test Nos. 70-3 to 70-6, test Nos. 70-15 to 70-18, test Nos. 70-27 to 70-30, test Nos. 60-3 to 60-6, test Nos. 60-15 to 60-18, test Nos. 60-27 to 60-30, test Nos. 55-3 to 55-6, test Nos. 55-15 to 55-18, test Nos. 55-27 to 55-30, test Nos. 51-3 to 51-6, test Nos. 51-15 to 51-18, and test Nos. 51-27 to 51-30, where $Al_2O_3$ was 38% or greater and $SiO_2$ was 22% or greater, the height of the excessive reinforcement of 3 mm or greater was secured and the effect of increasing the wire feed speed by the flux composition was manifest.

In test Nos. 100-11, 100-23, and 100-35, test Nos. 70-11, 70-23, and 70-35, test Nos. 60-11, 60-23, and 60-35, test Nos. 55-11, 55-23, and 55-35, and test Nos. 51-11, 51-23, and 51-35, the height of the excessive reinforcement was 2 mm or greater, thus showing an excellent effect of increasing a deposit amount through the effects of $Al_2O_3$ and $SiO_2$ although an iron powder was not contained.

In test Nos. 100-12, 100-24, and 100-36, test Nos. 70-12, 70-24, and 70-36, test Nos. 60-12, 60-24, and 60-36, test Nos. 55-12, 55-24, and 55-36, and test Nos. 51-12, 51-24, and 51-36, in which the amount of iron powder was increased to 20%, the height of the excessive reinforcement was 4 mm or greater, thus showing a still superior effect of increasing a deposit amount in addition to the aforementioned effects of $Al_2O_3$ and $SiO_2$.

On the other hand, in test Nos. 100-38, 70-38, 60-38, 55-38, and 51-38, the waveform ratio of the welding current for the first electrode 1 was 50%, which is not within the scope of the present invention. Therefore, the width of the weld penetration profile of the weld metal 8 was narrow, and hence, there occurred incomplete fusion as shown in FIG. 6A. Consequently, they were not good. In test Nos. 100-39, 70-39, 60-39, 55-39, and 51-39, a negative direct current with a waveform ratio of 100% was used as the welding current for the first electrode 1. Therefore, the arc was unstable, and hence, it was not possible to obtain a proper weld penetration depth of the weld metal 8. This led to an occurrence of incomplete fusion. Consequently, they were not good.

In test Nos. 100-40 to 100-44, test Nos. 70-40 to 70-43, test Nos. 60-40 to 60-42, test Nos. 55-40 to 55-41, and test No. 51-40, there was an electrode 7 with a wavefonn ratio of the welding current of 60%, which is not within the scope of the present invention, among the second electrode 2 and the subsequent electrodes. Therefore, it was not possible to obtain a required deposit amount, leading to a minus height of the excessive reinforcement. This prevented the deposit metal from being filled to the surface of the steel plate 9. Consequently, they were not good.

In test No. 100-45 and test No. 100-46, test No. 70-44 and test No. 70-45, test No. 60-43 and test No. 60-44, test No. 55-42 and test No. 55-43, and test No. 51-41 and test No. 51-42, $Al_2O_3$ or $SiO_2$ were lower than the corresponding lower limit value of the present invention. Therefore, it was not possible to obtain a required deposit amount, leading to a minus height of the excessive reinforcement. This prevented the deposit metal from being filled to the surface of the steel plate 9. Consequently, they were not good.

In test No. 100-47 and test No. 100-48, test No. 70-46 and test No. 70-47, test No. 60-45 and test No. 60-46, test No. 55-44 and test No. 55-45, and test No. 51-43 and test No. 51-44, $Al_2O_3$ or $SiO_2$ was excessively contained in an amount over the respective upper limit value of the present invention, leading to deteriorated toughness of the weld metal 8. Consequently, they were not good.

In test Nos. 100-49 to 100-52, test Nos. 70-48 to 70-51, test Nos. 60-47 to 60-50, test Nos. 55-46 to 55-49, and test Nos. 51-45 to 51-48, a total amount of MgO, $TriO_2$ $CaF_2$. and MnO was less than 10%, which is the lower limit value of the present invention, leading to an occurrence of undercuts. Consequently, they were not good.

In test Nos. 100-53, 70-52, 60-51, and 55-50, and test No. 51-49, MgO content was excessive, out of the scope of the present invention, leading to an occurrence of undercuts. Consequently, they were not good.

In test Nos. 100-54, 70-53, and 60-52, and test Nos. 55-51 and 51-50, $TiO_2$ content was excessive, which is not within the scope of the present invention, leading to deteriorated toughness of the weld metal 8. Consequently, they were not good.

In test Nos. 100-55, 70-54, 60-53, 55-52, and 51-51, $CaF_2$ content was excessive, which is not within the scope of the present invention, and hence, the arc was unstable. This made it impossible to obtain a proper weld penetration depth of the weld metal 8, leading to an occurrence of incomplete fusion. Consequently, they were not good.

In test Nos. 100-56, 70-55, 60-54, 55-53, and 51-52, MnO content was excessive, which is not within the scope of the present invention, leading to deteriorated toughness of the weld metal 8. Consequently, they were not good.

In test Nos. 100-57, 70-56, 60-55, 55-54, and 51-53, a total amount of MgO, $TiO_2$, $CaF_2$, and MnO was excessive, over 60%, which is the upper limit value of the present invention, and hence, the arc was unstable. This made it impossible to obtain a proper weld penetration depth of the weld metal 8, leading to an occurrence of incomplete fusion. Consequently, they were not good.

In test No. 100-58, the plate thickness was excessive, which is not within the scope of the present invention. Therefore, heat input was high and led to deteriorated toughness of the weld metal 8. Consequently, it was not good.

Table 1

| | | | | | | | | | (Unit: mass%) |
|---|---|---|---|---|---|---|---|---|---|
| | C | Si | Mn | P | S | Al | Ni | Mo | Ti |
| STEEL | 0.12 | 0.23 | 1.54 | 0.012 | 10.007 | 0.003 | 0 | 0 | 0.01 |
| WELDING WIRE | 0.06 | 0.33 | 1.4 | 0.007 | 0.003 | 0.01 | 4.23 | 1. 24 | 0.05 |

Table 2

|  |  |  |  |  |  |  |  |  |  |  | (Unit: mass%) |
|---|---|---|---|---|---|---|---|---|---|---|---|
| CATEGORY | FLUX | α GROUP | | TOTAL OF α GROUP | β GROUP | | | | TOTAL OF β GROUP | IRON POWDER | TOTAL |
|  |  | $Al_2O_3$ | $SiO_2$ |  | MgO | $TiO_2$ | $CaF_2$ | MnO |  |  |  |
| EXAMPLE | A | 12 | 18 | 30 | 20 | 10 | 20 | 10 | 60 | 10 | 100 |
| EXAMPLE | B | 38 | 18 | 56 | 10 | 10 | 0 | 14 | 34 | 10 | 100 |
| EXAMPLE | C | 45 | 25 | 70 | 10 | 0 | 10 | 0 | 20 | 10 | 100 |
| EXAMPLE | D | 40 | 30 | 70 | 10 | 0 | 0 | 10 | 20 | 10 | 100 |
| EXAMPLE | E | 50 | 30 | 80 | 5 | 0 | 5 | 0 | 10 | 10 | 100 |
| EXAMPLE | F | 50 | 30 | 80 | 0 | 5 | 0 | 5 | 10 | 10 | 100 |
| EXAMPLE | G | 30 | 20 | 50 | 40 | 0 | 0 | 0 | 40 | 10 | 100 |
| EXAMPLE | H | 50 | 20 | 70 | 0 | 20 | 0 | 0 | 20 | 10 | 100 |
| EXAMPLE | I | 40 | 20 | 60 | 0 | 0 | 30 | 0 | 30 | 10 | 100 |
| EXAMPLE | J | 50 | 20 | 70 | 0 | 0 | 0 | 20 | 20 | 10 | 100 |
| EXAMPLE | K | 40 | 30 | 70 | 0 | 5 | 10 | 15 | 30 | 0 | 100 |
| EXAMPLE | L | 40 | 30 | 70 | 0 | 2 | 5 | 3 | 10 | 20 | 100 |
| COMPARATIVE EXAMPLE | M | 8 | 30 | 38 | 10 | 12 | 20 | 10 | 52 | 10 | 100 |
| COMPARATIVE EXAMPLE | N | 40 | 14 | 54 | 10 | 0 | 12 | 14 | 36 | 10 | 100 |
| COMPARATIVE EXAMPLE | O | 52 | 18 | 70 | 10 | 0 | 10 | 0 | 20 | 10 | 100 |
| COMPARATIVE EXAMPLE | P | 30 | 32 | 62 | 10 | 0 | 10 | 8 | 28 | 10 | 100 |
| COMPARATIVE EXAMPLE | Q | 50 | 30 | 80 | 8 | 0 | 0 | 0 | 8 | 12 | 100 |
| COMPARATIVE EXAMPLE | R | 43 | 25 | 68 | 0 | 8 | 0 | 0 | 8 | 24 | 100 |
| COMPARATIVE EXAMPLE | S | 39 | 23 | 62 | 0 | 0 | 8 | 0 | 8 | 30 | 100 |
| COMPARATIVE EXAMPLE | T | 43 | 25 | 68 | 0 | 0 | 0 | 8 | 8 | 24 | 100 |
| COMPARATIVE EXAMPLE | U | 31 | 17 | 48 | 42 | 0 | 0 | 0 | 42 | 10 | 100 |
| COMPARATIVE EXAMPLE | V | 43 | 25 | 68 | 0 | 22 | 0 | 0 | 22 | 10 | 100 |
| COMPARATIVE EXAMPLE | W | 35 | 23 | 58 | 0 | 0 | 32 | 0 | 32 | 10 | 100 |

EP 2 767 361 B1

10

(continued)

|  |  | | | | | | | | | | (Unit: mass%) |
| CATEGORY | FLUX | $\alpha$ GROUP | | TOTAL OF $\alpha$ GROUP | $\beta$ GROUP | | | | TOTAL OF $\beta$ GROUP | IRON POWDER | TOTAL |
| | | $Al_2O_3$ | $SiO_2$ | | MgO | $TiO_2$ | $CaF_2$ | MnO | | | |
|---|---|---|---|---|---|---|---|---|---|---|---|
| COMPARATIVE EXAMPLE | X | 43 | 25 | 68 | 0 | 0 | 0 | 22 | 22 | 10 | 100 |
| COMPARATIVE EXAMPLE | Y | 11 | 17 | 28 | 25 | 15 | 15 | 7 | 62 | 10 | 100 |

Table 3

| | 1ST ELECTRODE | 2ND ELECTRODE | 3RD ELECTRODE | 4TH ELECTRODE | 5TH ELECTRODE | 6TH ELECTRODE |
|---|---|---|---|---|---|---|
| CURRENT (A) | 2800 | 1800 | 1600 | 1000 | 900 | 900 |
| VOLTAGE (V) | 35 | 40 | 42 | 44 | 48 | 52 |
| WIRE DIAMETER (mm) | 6.4 | 6.4 | 6.4 | 6.4 | 6.4 | 6.4 |
| ELECTRODE ANGLE | -10° | -7° | -4° | +4° | +7° | +10° |
| DISTANCE BETWEEN ELECTRODES | SPACE BETWEEN ELECTRODES SETS TO 70 mm | | | | | |
| WELDING SPEED | 60 cm/min | | | | | |
| HEAT INPUT | 371 kJ/cm | | | | | |

Table 4

|  | 1ST ELECTRODE | 2ND ELECTRODE | 3RD ELECTRODE | 4TH ELECTRODE | 5TH ELECTRODE | 6TH ELECTRODE |
|---|---|---|---|---|---|---|
| CURRENT (A) | 2800 | 1800 | 1600 | 1200 | 900 | - |
| VOLTAGE (V) | 35 | 40 | 42 | 44 | 48 | - |
| WIRE DIAMETER (mm) | 6.4 | 6.4 | 6.4 | 6.4 | 6.4 | - |
| ELECTRODE ANGLE | -10° | -7° | -4° | +4° | +10° | - |
| DISTANCE BETWEEN ELECTRODES | SPACE BETWEEN ELECTRODES SETS TO 70 mm | | | | | |
| WELDING SPEED | 80 cm/min | | | | | |
| HEAT INPUT | 250 kJ/cm | | | | | |

Table 5

| | 1ST ELECTRODE | 2ND ELECTRODE | 3RD ELECTRODE | 4TH ELECTRODE | 5TH ELECTRODE | 6TH ELECTRODE |
|---|---|---|---|---|---|---|
| CURRENT (A) | 2500 | 2200 | 1600 | 1400 | - | - |
| VOLTAGE (V) | 35 | 40 | 42 | 44 | - | - |
| WIRE DIAMETER (mm) | 6. 4 | 6. 4 | 6. 4 | 6. 4 | - | - |
| ELECTRODE ANGLE | -10° | -7° | -4° | +10° | - | - |
| DISTANCE BETWEEN ELECTRODES | SPACE BETWEEN ELECTRODES SETS TO 70 mm | | | | | |
| WELDING SPEED | 90 cm/min | | | | | |
| HEAT INPUT | 203 kJ/cm | | | | | |

Table 6

| | 1ST ELECTRODE | 2ND ELECTRODE | 3RD ELECTRODE | 4TH ELECTRODE | 5TH ELECTRODE | 6TH ELECTRODE |
|---|---|---|---|---|---|---|
| CURRENT (A) | 1800 | 1700 | 1600 | - | - | - |
| VOLTAGE (V) | 35 | 40 | 42 | - | - | - |
| WIRE DIAMETER (mn) | 6.4 | 6.4 | 6.4 | - | - | - |
| ELECTRODE ANGLE | -10° | -7° | +10° | - | - | - |
| DISTANCE BETWEEN ELECTRODES | SPACE BETWEEN ELECTRODES SETS TO 70 mm | | | | | |
| WIELDING SPEED | 50 cm/min | | | | | |
| HEAT INPUT | 132 kJ/cm | | | | | |

Table 7

| | 1ST ELECTRODE | 2ND ELECTRODE | 3RD ELECTRODE | 4TH ELECTRODE | 5TH ELECTRODE | 6TH ELECTRODE |
|---|---|---|---|---|---|---|
| CURRENT (A) | 1800 | 1700 | - | - | - | - |
| VOLTAGE (V) | 35 | 40 | - | - | - | - |
| WIRE DIAMETER(mm) | 6.4 | 6.4 | - | - | - | - |
| ELECTRODE ANGLE | -10° | +10° | - | - | - | - |
| DISTANCE BETWEEN ELECTRODES | SPACE BETWEEN ELECTRODES SETS TO 70 mm | | | | | |
| WELDING SPEED | 50 cm/min | | | | | |
| HEAT INPUT | 87 kJ/cm | | | | | |

Table 8

| | 1ST ELECTRODE | 2ND ELECTRODE | 3RD ELECTRODE | 4TH ELECTRODE | 5TH ELECTRODE | 6TH ELECTRODE |
|---|---|---|---|---|---|---|
| CURRENT (A) | 2700 | 1800 | 1600 | 900 | 800 | 600 |
| VOLTAGE (V) | 35 | 40 | 42 | 44 | 48 | 52 |
| WIRE DIAMETER (mm) | 6.4 | 6.4 | 6.4 | 6.4 | 6. 4 | 6.4 |
| ELECTRODE ANGLE | -10° | -7° | -4° | +4° | +4° | +10° |
| DISTANCE BETWEEN ELECTRODES | SPACE BETWEEN ELECTRODES SETS T0 70 mm | | | | | |
| WELDING SPEED | 39 cm/min | | | | | |
| HEAT INPUT | 528 kJ/cm | | | | | |

Table 9

| NO. | CATEGORY | PLATE THICKNESS (mm) | FLUX | WAVEFORM RATIO (%) | | | | | |
|-----|----------|---------------------|------|---------------------|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 100-1 | EXAMPLE | 100 | A | 60 | 70 | 70 | 70 | 70 | 70 |
| 100-2 | EXAMPLE | 100 | B | 60 | 70 | 70 | 70 | 70 | 70 |
| 100-3 | EXAMPLE | 100 | C | 60 | 70 | 70 | 70 | 70 | 70 |
| 100-4 | EXAMPLE | 100 | D | 60 | 70 | 70 | 70 | 70 | 70 |
| 100-5 | EXAMPLE | 100 | E | 60 | 70 | 70 | 70 | 70 | 70 |
| 100-6 | EXAMPLE | 100 | F | 60 | 70 | 70 | 70 | 70 | 70 |
| 100-7 | EXAMPLE | 100 | G | 60 | 70 | 70 | 70 | 70 | 70 |
| 100-8 | EXAMPLE | 100 | H | 60 | 70 | 70 | 70 | 70 | 70 |
| 100-9 | EXAMPLE | 100 | I | 60 | 70 | 70 | 70 | 70 | 70 |
| 100-10 | EXAMPLE | 100 | J | 60 | 70 | 70 | 70 | 70 | 70 |
| 100-11 | EXAMPLE | 100 | K | 60 | 70 | 70 | 70 | 70 | 70 |
| 100-12 | EXAMPLE | 100 | L | 60 | 70 | 70 | 70 | 70 | 70 |
| 100-13 | EXAMPLE | 100 | A | 90 | 70 | 70 | 70 | 70 | 70 |
| 100-14 | EXAMPLE | 100 | B | 90 | 70 | 70 | 70 | 70 | 70 |
| 100-15 | EXAMPLE | 100 | C | 90 | 70 | 70 | 70 | 70 | 70 |
| 100-16 | EXAMPLE | 100 | D | 90 | 70 | 70 | 70 | 70 | 70 |
| 100-17 | EXAMPLE | 100 | E | 90 | 70 | 70 | 70 | 70 | 70 |
| 100-18 | EXAMPLE | 100 | F | 90 | 70 | 70 | 70 | 70 | 70 |
| 100-19 | EXAMPLE | 100 | G | 90 | 70 | 70 | 70 | 70 | 70 |
| 100-20 | EXAMPLE | 100 | H | 90 | 70 | 70 | 70 | 70 | 70 |
| 100-21 | EXAMPLE | 100 | I | 90 | 70 | 70 | 70 | 70 | 70 |
| 100-22 | EXAMPLE | 100 | J | 90 | 70 | 70 | 70 | 70 | 70 |
| 100-23 | EXAMPLE | 100 | K | 90 | 70 | 70 | 70 | 70 | 70 |
| 100-24 | EXAMPLE | 100 | L | 90 | 70 | 70 | 70 | 70 | 70 |

(continued)

| NO. | CATEGORY | PLATE THICKNESS (mm) | FLUX | WAVEFORM RATIO (%) | | | | | |
|---|---|---|---|---|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 100-25 | EXAMPLE | 100 | A | 75 | 100 | 100 | 100 | 100 | 100 |
| 100-26 | EXAMPLE | 100 | B | 75 | 100 | 100 | 100 | 100 | 100 |
| 100-27 | EXAMPLE | 100 | C | 75 | 100 | 100 | 100 | 100 | 100 |
| 100-28 | EXAMPLE | 100 | D | 75 | 100 | 100 | 100 | 100 | 100 |
| 100-29 | EXAMPLE | 100 | E | 75 | 100 | 100 | 100 | 100 | 100 |
| 100-30 | EXAMPLE | 100 | F | 75 | 100 | 100 | 100 | 100 | 100 |
| 100-31 | EXAMPLE | 100 | G | 75 | 100 | 100 | 100 | 100 | 100 |
| 100-32 | EXAMPLE | 100 | H | 75 | 100 | 100 | 100 | 100 | 100 |
| 100-33 | EXAMPLE | 100 | I | 75 | 100 | 100 | 100 | 100 | 100 |
| 100-34 | EXAMPLE | 100 | J | 75 | 100 | 100 | 100 | 100 | 100 |
| 100-35 | EXAMPLE | 100 | K | 75 | 100 | 100 | 100 | 100 | 100 |
| 100-36 | EXAMPLE | 100 | L | 75 | 100 | 100 | 100 | 100 | 100 |
| 100-37 | EXAMPLE | 100 | A | 75 | 70 | 80 | 80 | 90 | 100 |
| 100-38 | COMPARATIVE EXAMPLE | 100 | C | 50 | 70 | 70 | 70 | 70 | 70 |
| 100-39 | COMPARATIVE EXAMPLE | 100 | C | 100 | 70 | 70 | 70 | 70 | 70 |
| 100-40 | COMPARATIVE EXAMPLE | 100 | C | 75 | 60 | 70 | 70 | 70 | 70 |
| 100-41 | COMPARATIVE EXAMPLE | 100 | C | 75 | 70 | 60 | 70 | 70 | 70 |
| 100-42 | COMPARATIVE EXAMPLE | 100 | C | 75 | 70 | 70 | 60 | 70 | 70 |
| 100-43 | COMPARATIVE EXAMPLE | 100 | C | 75 | 70 | 70 | 70 | 60 | 70 |

| NO. | CATEGORY | PLATE THICKNESS (mm) | FLUX | WAVEFORM RATIO (%) | | | | | |
|---|---|---|---|---|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 100-44 | COMPARATIVE EXAMPLE | 100 | C | 75 | 70 | 70 | 70 | 70 | 60 |
| 100-45 | COMPARATIVE EXAMPLE | 100 | M | 75 | 90 | 90 | 90 | 90 | 90 |
| 100-46 | COMPARATIVE EXAMPLE | 100 | N | 75 | 90 | 90 | 90 | 90 | 90 |
| 100-47 | COMPARATIVE EXAMPLE | 100 | O | 75 | 90 | 90 | 90 | 90 | 90 |
| 100-48 | COMPARATIVE EXAMPLE | 100 | P | 75 | 90 | 90 | 90 | 90 | 90 |
| 100-49 | COMPARATIVE EXAMPLE | 100 | Q | 75 | 90 | 90 | 90 | 90 | 90 |
| 100-50 | COMPARATIVE EXAMPLE | 100 | R | 75 | 90 | 90 | 90 | 90 | 90 |
| 100-51 | COMPARATIVE EXAMPLE | 100 | S | 75 | 90 | 90 | 90 | 90 | 90 |
| 100-52 | COMPARATIVE EXAMPLE | 100 | T | 75 | 90 | 90 | 90 | 90 | 90 |
| 100-53 | COMPARATIVE EXAMPLE | 100 | U | 75 | 90 | 90 | 90 | 90 | 90 |
| 100-54 | COMPARATIVE EXAMPLE | 100 | V | 75 | 90 | 90 | 90 | 90 | 90 |
| 100-55 | COMPARATIVE EXAMPLE | 100 | W | 75 | 90 | 90 | 90 | 90 | 90 |
| 100-56 | COMPARATIVE EXAMPLE | 100 | X | 75 | 90 | 90 | 90 | 90 | 90 |
| 100-57 | COMPARATIVE EXAMPLE | 100 | Y | 75 | 90 | 90 | 90 | 90 | 90 |

(continued)

| NO. | CATEGORY | PLATE THICKNESS (mm) | FLUX | WAVEFORM RATIO (%) | | | | | |
| --- | --- | --- | --- | --- | --- | --- | --- | --- | --- |
| | | | | 1ST ELECTRODE | 2ND ELECTRODE | 3RD ELECTRODE | 4TH ELECTRODE | 5TH ELECTRODE | 6TH ELECTRODE |
| 100-58 | COMPARATIVE EXAMPLE | 110 | D | 75 | 100 | 100 | 100 | 100 | 100 |

Table 10

| NO. | CATEGORY | PLATE THICKNESS (mm) | FLUX | WAVEFORM RATIO (%) | | | | | |
|---|---|---|---|---|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 70-1 | EXAMPLE | 70 | A | 60 | 70 | 70 | 70 | 70 | |
| 70-2 | EXAMPLE | 70 | B | 60 | 70 | 70 | 70 | 70 | |
| 70-3 | EXAMPLE | 70 | C | 60 | 70 | 70 | 70 | 70 | |
| 70-4 | EXAMPLE | 70 | D | 60 | 70 | 70 | 70 | 70 | |
| 70-5 | EXAMPLE | 70 | E | 60 | 70 | 70 | 70 | 70 | |
| 70-6 | EXAMPLE | 70 | F | 60 | 70 | 70 | 70 | 70 | |
| 70-7 | EXAMPLE | 70 | G | 60 | 70 | 70 | 70 | 70 | |
| 70-8 | EXAMPLE | 70 | H | 60 | 70 | 70 | 70 | 70 | |
| 70-9 | EXAMPLE | 70 | I | 60 | 70 | 70 | 70 | 70 | |
| 70-10 | EXAMPLE | 70 | J | 60 | 70 | 70 | 70 | 70 | |
| 70-11 | EXAMPLE | 70 | K | 60 | 70 | 70 | 70 | 70 | |
| 70-12 | EXAMPLE | 70 | L | 60 | 70 | 70 | 70 | 70 | |
| 70-13 | EXAMPLE | 70 | A | 90 | 70 | 70 | 70 | 70 | |
| 70-14 | EXAMPLE | 70 | B | 90 | 70 | 70 | 70 | 70 | |
| 70-15 | EXAMPLE | 70 | C | 90 | 70 | 70 | 70 | 70 | |
| 70-16 | EXAMPLE | 70 | D | 90 | 70 | 70 | 70 | 70 | |
| 70-17 | EXAMPLE | 70 | E | 90 | 70 | 70 | 70 | 70 | |
| 70-18 | EXAMPLE | 70 | F | 90 | 70 | 70 | 70 | 70 | |
| 70-19 | EXAMPLE | 70 | G | 90 | 70 | 70 | 70 | 70 | |
| 70-20 | EXAMPLE | 70 | H | 90 | 70 | 70 | 70 | 70 | |
| 70-21 | EXAMPLE | 70 | I | 90 | 70 | 70 | 70 | 70 | |
| 70-22 | EXAMPLE | 70 | J | 90 | 70 | 70 | 70 | 70 | |
| 70-23 | EXAMPLE | 70 | K | 60 | 70 | 70 | 70 | 70 | |
| 70-24 | EXAMPLE | 70 | L | 60 | 70 | 70 | 70 | 70 | |

(continued)

| NO. | CATEGORY | PLATE THICKNESS (mm) | FLUX | WAVEFORM RATIO (%) | | | | | |
|---|---|---|---|---|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 70-25 | EXAMPLE | 70 | A | 75 | 100 | 100 | 100 | 100 | |
| 70-26 | EXAMPLE | 70 | B | 75 | 100 | 100 | 100 | 100 | |
| 70-27 | EXAMPLE | 70 | C | 75 | 100 | 100 | 100 | 100 | |
| 70-28 | EXAMPLE | 70 | D | 75 | 100 | 100 | 100 | 100 | |
| 70-29 | EXAMPLE | 70 | E | 75 | 100 | 100 | 100 | 100 | |
| 70-30 | EXAMPLE | 70 | F | 75 | 100 | 100 | 100 | 100 | |
| 70-31 | EXAMPLE | 70 | G | 75 | 100 | 100 | 100 | 100 | |
| 70-32 | EXAMPLE | 70 | H | 75 | 100 | 100 | 100 | 100 | |
| 70-33 | EXAMPLE | 70 | I | 75 | 100 | 100 | 100 | 100 | |
| 70-34 | EXAMPLE | 70 | J | 75 | 100 | 100 | 100 | 100 | |
| 70-35 | EXAMPLE | 70 | K | 60 | 70 | 70 | 70 | 70 | |
| 70-36 | EXAMPLE | 70 | L | 60 | 70 | 70 | 70 | 70 | |
| 70-37 | EXAMPLE | 70 | A | 75 | 70 | 80 | 80 | 90 | |
| 70-38 | COMPARATIVE EXAMPLE | 70 | C | 50 | 70 | 70 | 70 | 70 | |
| 70-39 | COMPARATIVE EXAMPLE | 70 | C | 100 | 70 | 70 | 70 | 70 | |
| 70-40 | COMPARATIVE EXAMPLE | 70 | C | 75 | 60 | 70 | 70 | 70 | |
| 70-41 | COMPARATIVE EXAMPLE | 70 | C | 75 | 70 | 60 | 70 | 70 | |
| 70-42 | COMPARATIVE EXAMPLE | 70 | C | 75 | 70 | 70 | 60 | 70 | |
| 70-43 | COMPARATIVE EXAMPLE | 70 | C | 75 | 70 | 70 | 70 | 60 | |

(continued)

| NO. | CATEGORY | PLATE THICKNESS (mm) | FLUX | WAVEFORM RATIO (%) | | | | | |
|---|---|---|---|---|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 70-44 | COMPARATIVE EXAMPLE | 70 | M | 75 | 90 | 90 | 90 | 90 | |
| 70-45 | COMPARATIVE EXAMPLE | 70 | N | 75 | 90 | 90 | 90 | 90 | |
| 70-46 | COMPARATIVE EXAMPLE | 70 | O | 75 | 90 | 90 | 90 | 90 | |
| 70-47 | COMPARATIVE EXAMPLE | 70 | P | 75 | 90 | 90 | 90 | 90 | |
| 70-48 | COMPARATIVE EXAMPLE | 70 | Q | 75 | 90 | 90 | 90 | 90 | |
| 70-49 | COMPARATIVE EXAMPLE | 70 | R | 75 | 90 | 90 | 90 | 90 | |
| 70-50 | COMPARATIVE EXAMPLE | 70 | S | 75 | 90 | 90 | 90 | 90 | |
| 70-51 | COMPARATIVE EXAMPLE | 70 | T | 75 | 90 | 90 | 90 | 90 | |
| 70-52 | COMPARATIVE EXAMPLE | 70 | U | 75 | 90 | 90 | 90 | 90 | |
| 70-53 | COMPARATIVE EXAMPLE | 70 | V | 75 | 90 | 90 | 90 | 90 | |
| 70-54 | COMPARATIVE EXAMPLE | 70 | W | 75 | 90 | 90 | 90 | 90 | |
| 70-55 | COMPARATIVE EXAMPLE | 70 | X | 75 | 90 | 90 | 90 | 90 | |
| 70-56 | COMPARATIVE EXAMPLE | 70 | Y | 75 | 90 | 90 | 90 | 90 | |

Table 11

| NO. | CATEGORY | PLATE THICKNESS (mm) | FLUX | WAVEFORM RATIO(%) | | | | | |
|-----|----------|---------------------|------|-------------------|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 60-1 | EXAMPLE | 60 | A | 60 | 70 | 70 | 70 | | |
| 60-2 | EXAMPLE | 60 | B | 60 | 70 | 70 | 70 | | |
| 60-3 | EXAMPLE | 60 | C | 60 | 70 | 70 | 70 | | |
| 60-4 | EXAMPLE | 60 | D | 60 | 70 | 70 | 70 | | |
| 60-5 | EXAMPLE | 60 | E | 60 | 70 | 70 | 70 | | |
| 60-6 | EXAMPLE | 60 | F | 60 | 70 | 70 | 70 | | |
| 60-7 | EXAMPLE | 60 | G | 60 | 70 | 70 | 70 | | |
| 60-8 | EXAMPLE | 60 | H | 60 | 70 | 70 | 70 | | |
| 60-9 | EXAMPLE | 60 | I | 60 | 70 | 70 | 70 | | |
| 60-10 | EXAMPLE | 60 | J | 60 | 70 | 70 | 70 | | |
| 60-11 | EXAMPLE | 60 | K | 60 | 70 | 70 | 70 | | |
| 60-12 | EXAMPLE | 60 | L | 60 | 70 | 70 | 70 | | |
| 60-13 | EXAMPLE | 60 | A | 90 | 70 | 70 | 70 | | |
| 60-14 | EXAMPLE | 60 | B | 90 | 70 | 70 | 70 | | |
| 60-15 | EXAMPLE | 60 | C | 90 | 70 | 70 | 70 | | |
| 60-16 | EXAMPLE | 60 | D | 90 | 70 | 70 | 70 | | |
| 60-17 | EXAMPLE | 60 | E | 90 | 70 | 70 | 70 | | |
| 60-18 | EXAMPLE | 60 | F | 90 | 70 | 70 | 70 | | |
| 60-19 | EXAMPLE | 60 | G | 90 | 70 | 70 | 70 | | |
| 60-20 | EXAMPLE | 60 | H | 90 | 70 | 70 | 70 | | |
| 60-21 | EXAMPLE | 60 | I | 90 | 70 | 70 | 70 | | |
| 60-22 | EXAMPLE | 60 | J | 90 | 70 | 70 | 70 | | |
| 60-23 | EXAMPLE | 60 | K | 60 | 70 | 70 | 70 | | |
| 60-24 | EXAMPLE | 60 | L | 60 | 70 | 70 | 70 | | |

(continued)

| NO. | CATEGORY | PLATE THICKNESS (mm) | FLUX | WAVEFORM RATIO(%) | | | | | |
|---|---|---|---|---|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 60-25 | EXAMPLE | 60 | A | 75 | 100 | 100 | 100 | | |
| 60-26 | EXAMPLE | 60 | B | 75 | 100 | 100 | 100 | | |
| 60-27 | EXAMPLE | 60 | C | 75 | 100 | 100 | 100 | | |
| 60-28 | EXAMPLE | 60 | D | 75 | 100 | 100 | 100 | | |
| 60-29 | EXAMPLE | 60 | E | 75 | 100 | 100 | 100 | | |
| 60-30 | EXAMPLE | 60 | F | 75 | 100 | 100 | 100 | | |
| 60-31 | EXAMPLE | 60 | G | 75 | 100 | 100 | 100 | | |
| 60-32 | EXAMPLE | 60 | H | 75 | 100 | 100 | 100 | | |
| 60-33 | EXAMPLE | 60 | I | 75 | 100 | 100 | 100 | | |
| 60-34 | EXAMPLE | 60 | J | 75 | 100 | 100 | 100 | | |
| 60-35 | EXAMPLE | 60 | K | 60 | 70 | 70 | 70 | | |
| 60-36 | EXAMPLE | 60 | L | 60 | 70 | 70 | 70 | | |
| 60-37 | EXAMPLE | 60 | A | 75 | 70 | 80 | 80 | | |
| 60-38 | COMPARATIVE EXAMPLE | 60 | C | 50 | 70 | 70 | 70 | | |
| 60-39 | COMPARATIVE EXAMPLE | 60 | C | 100 | 70 | 70 | 70 | | |
| 60-40 | COMPARATIVE EXAMPLE | 60 | C | 75 | 60 | 70 | 70 | | |
| 60-41 | COMPARATIVE EXAMPLE | 60 | C | 75 | 70 | 60 | 70 | | |
| 60-42 | COMPARATIVE EXAMPLE | 60 | C | 75 | 70 | 70 | 60 | | |
| 60-43 | COMPARATIVE EXAMPLE | 60 | M | 75 | 90 | 90 | 90 | | |

(continued)

| NO. | CATEGORY | PLATE THICKNESS (mm) | FLUX | WAVEFORM RATIO(%) | | | | | |
|---|---|---|---|---|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 60-44 | COMPARATIVE EXAMPLE | 60 | N | 75 | 90 | 90 | 90 | | |
| 60-45 | COMPARATIVE EXAMPLE | 60 | O | 75 | 90 | 90 | 90 | | |
| 60-46 | COMPARATIVE EXAMPLE | 60 | P | 75 | 90 | 90 | 90 | | |
| 60-47 | COMPARATIVE EXAMPLE | 60 | Q | 75 | 90 | 90 | 90 | | |
| 60-48 | COMPARATIVE EXAMPLE | 60 | R | 75 | 90 | 90 | 90 | | |
| 60-49 | COMPARATIVE EXAMPLE | 60 | S | 75 | 90 | 90 | 90 | | |
| 60-50 | COMPARATIVE EXAMPLE | 60 | T | 75 | 90 | 90 | 90 | | |
| 60-51 | COMPARATIVE EXAMPLE | 60 | U | 75 | 90 | 90 | 90 | | |
| 60-52 | COMPARATIVE EXAMPLE | 60 | V | 75 | 90 | 90 | 90 | | |
| 60-53 | COMPARATIVE EXAMPLE | 60 | W | 75 | 90 | 90 | 90 | | |
| 60-54 | COMPARATIVE EXAMPLE | 60 | X | 75 | 90 | 90 | 90 | | |
| 60-55 | COMPARATIVE EXAMPLE | 60 | Y | 75 | 90 | 90 | 90 | | |

Table 12

| NO. | CATEGORY | PLATE THICKNESS (mm) | FLUX | WAVEFORM RAT10(%) | | | | | |
|-----|----------|---------------------|------|----------------|----------------|----------------|----------------|----------------|----------------|
| | | | | 1ST ELECTRODE | 2ND ELECTRODE | 3RD ELECTRODE | 4TH ELECTRODE | 5TH ELECTRODE | 6TH ELECTRODE |
| 55-1 | EXAMPLE | 55 | A | 60 | 70 | 70 | | | |
| 55-2 | EXAMPLE | 55 | B | 60 | 70 | 70 | | | |
| 55-3 | EXAMPLE | 55 | C | 60 | 70 | 70 | | | |
| 55-4 | EXAMPLE | 55 | D | 60 | 70 | 70 | | | |
| 55-5 | EXAMPLE | 55 | E | 60 | 70 | 70 | | | |
| 55-6 | EXAMPLE | 55 | F | 60 | 70 | 70 | | | |
| 55-7 | EXAMPLE | 55 | G | 60 | 70 | 70 | | | |
| 55-8 | EXAMPLE | 55 | H | 60 | 70 | 70 | | | |
| 55-9 | EXAMPLE | 55 | I | 60 | 70 | 70 | | | |
| 55-10 | EXAMPLE | 55 | J | 60 | 70 | 70 | | | |
| 55-11 | EXAMPLE | 55 | K | 60 | 70 | 70 | | | |
| 55-12 | EXAMPLE | 55 | L | 60 | 70 | 70 | | | |
| 55-13 | EXAMPLE | 55 | A | 90 | 70 | 70 | | | |
| 55-14 | EXAMPLE | 55 | B | 90 | 70 | 70 | | | |
| 55-15 | EXAMPLE | 55 | C | 90 | 70 | 70 | | | |
| 55-16 | EXAMPLE | 55 | D | 90 | 70 | 70 | | | |
| 55-17 | EXAMPLE | 55 | E | 90 | 70 | 70 | | | |
| 55-18 | EXAMPLE | 55 | F | 90 | 70 | 70 | | | |
| 55-19 | EXAMPLE | 55 | G | 90 | 70 | 70 | | | |
| 55-20 | EXAMPLE | 55 | H | 90 | 70 | 70 | | | |
| 55-21 | EXAMPLE | 55 | I | 90 | 70 | 70 | | | |
| 55-22 | EXAMPLE | 55 | J | 90 | 70 | 70 | | | |
| 55-23 | EXAMPLE | 55 | K | 60 | 70 | 70 | | | |
| 55-24 | EXAMPLE | 55 | L | 60 | 70 | 70 | | | |

EP 2 767 361 B1

28

| NO. | CATEGORY | PLATE THICKNESS (mm) | FLUX | WAVEFORM RAT10(%) | | | | | |
|---|---|---|---|---|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 55-25 | EXAMPLE | 55 | A | 75 | 100 | 100 | | | |
| 55-26 | EXAMPLE | 55 | B | 75 | 100 | 100 | | | |
| 55-27 | EXAMPLE | 55 | C | 75 | 100 | 100 | | | |
| 55-28 | EXAMPLE | 55 | D | 75 | 100 | 100 | | | |
| 55-29 | EXAMPLE | 55 | E | 75 | 100 | 100 | | | |
| 55-30 | EXAMPLE | 55 | F | 75 | 100 | 100 | | | |
| 55-31 | EXAMPLE | 55 | G | 75 | 100 | 100 | | | |
| 55-32 | EXAMPLE | 55 | H | 75 | 100 | 100 | | | |
| 55-33 | EXAMPLE | 55 | I | 75 | 100 | 100 | | | |
| 55-34 | EXAMPLE | 55 | J | 75 | 100 | 100 | | | |
| 55-35 | EXAMPLE | 55 | K | 60 | 70 | 70 | | | |
| 55-36 | EXAMPLE | 55 | L | 60 | 70 | 70 | | | |
| 55-37 | EXAMPLE | 55 | A | 75 | 70 | 80 | | | |
| 55-38 | COMPARATIVE EXAMPLE | 55 | C | 50 | 70 | 70 | | | |
| 55-39 | COMPARATIVE EXAMPLE | 55 | C | 100 | 70 | 70 | | | |
| 55-40 | COMPARATIVE EXAMPLE | 55 | C | 75 | 60 | 70 | | | |
| 55-41 | COMPARATIVE EXAMPLE | 55 | C | 75 | 70 | 60 | | | |
| 55-42 | COMPARATIVE EXAMPLE | 55 | M | 75 | 90 | 90 | | | |
| 55-43 | COMPARATIVE EXAMPLE | 55 | N | 75 | 90 | 90 | | | |

EP 2 767 361 B1

| NO. | CATEGORY | PLATE THICKNESS (mm) | FLUX | WAVEFORM RAT10(%) | | | | | |
|-----|----------|------|------|------|------|------|------|------|------|
| | | | | 1ST ELECTRODE | 2ND ELECTRODE | 3RD ELECTRODE | 4TH ELECTRODE | 5TH ELECTRODE | 6TH ELECTRODE |
| 55-44 | COMPARATIVE EXAMPLE | 55 | O | 75 | 90 | 90 | | | |
| 55-45 | COMPARATIVE EXAMPLE | 55 | P | 75 | 90 | 90 | | | |
| 55-46 | COMPARATIVE EXAMPLE | 55 | Q | 75 | 90 | 90 | | | |
| 55-47 | COMPARATIVE EXAMPLE | 55 | R | 75 | 90 | 90 | | | |
| 55-48 | COMPARATIVE EXAMPLE | 55 | S | 75 | 90 | 90 | | | |
| 55-49 | COMPARATIVE EXAMPLE | 55 | T | 75 | 90 | 90 | | | |
| 55-50 | COMPARATIVE EXAMPLE | 55 | U | 75 | 90 | 90 | | | |
| 55-51 | COMPARATIVE EXAMPLE | 55 | V | 75 | 90 | 90 | | | |
| 55-52 | COMPARATIVE EXAMPLE | 55 | W | 75 | 90 | 90 | | | |
| 55-53 | COMPARATIVE EXAMPLE | 55 | X | 75 | 90 | 90 | | | |
| 55-54 | COMPARATIVE EXAMPLE | 55 | Y | 75 | 90 | 90 | | | |

Table 13

| NO. | CATEGORY | PLATE THICKNESS (mm) | FLUX | WAVEFORM RATIO(%) | | | | | |
|---|---|---|---|---|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 51-1 | EXAMPLE | 51 | A | 60 | 70 | | | | |
| 51-2 | EXAMPLE | 51 | B | 60 | 70 | | | | |
| 51-3 | EXAMPLE | 51 | C | 60 | 70 | | | | |
| 51-4 | EXAMPLE | 51 | D | 60 | 70 | | | | |
| 51-5 | EXAMPLE | 51 | E | 60 | 70 | | | | |
| 51-6 | EXAMPLE | 51 | F | 60 | 70 | | | | |
| 51-7 | EXAMPLE | 51 | G | 60 | 70 | | | | |
| 51-8 | EXAMPLE | 51 | H | 60 | 70 | | | | |
| 51-9 | EXAMPLE | 51 | I | 60 | 70 | | | | |
| 51-10 | EXAMPLE | 51 | J | 60 | 70 | | | | |
| 51-11 | EXAMPLE | 51 | K | 60 | 70 | | | | |
| 51-12 | EXAMPLE | 51 | L | 60 | 70 | | | | |
| 51-13 | EXAMPLE | 51 | A | 90 | 70 | | | | |
| 51-14 | EXAMPLE | 51 | B | 90 | 70 | | | | |
| 51-15 | EXAMPLE | 51 | C | 90 | 70 | | | | |
| 51-16 | EXAMPLE | 51 | D | 90 | 70 | | | | |
| 51-17 | EXAMPLE | 51 | E | 90 | 70 | | | | |
| 51-18 | EXAMPLE | 51 | F | 90 | 70 | | | | |
| 51-19 | EXAMPLE | 51 | G | 90 | 70 | | | | |
| 51-20 | EXAMPLE | 51 | H | 90 | 70 | | | | |
| 51-21 | EXAMPLE | 51 | I | 90 | 70 | | | | |
| 51-22 | EXAMPLE | 51 | J | 90 | 70 | | | | |
| 51-23 | EXAMPLE | 51 | K | 60 | 70 | | | | |
| 51-24 | EXAMPLE | 51 | L | 60 | 70 | | | | |

| NO. | CATEGORY | PLATE THICKNESS (mm) | FLUX | WAVEFORM RATIO(%) | | | | | |
|-----|----------|------|------|-----|-----|-----|-----|-----|-----|
| | | | | 1ST ELECTRODE | 2ND ELECTRODE | 3RD ELECTRODE | 4TH ELECTRODE | 5TH ELECTRODE | 6TH ELECTRODE |
| 51-25 | EXAMPLE | 51 | A | 75 | 100 | | | | |
| 51-26 | EXAMPLE | 51 | B | 75 | 100 | | | | |
| 51-27 | EXAMPLE | 51 | C | 75 | 100 | | | | |
| 51-28 | EXAMPLE | 51 | D | 75 | 100 | | | | |
| 51-29 | EXAMPLE | 51 | E | 75 | 100 | | | | |
| 51-30 | EXAMPLE | 51 | F | 75 | 100 | | | | |
| 51-31 | EXAMPLE | 51 | G | 75 | 100 | | | | |
| 51-32 | EXAMPLE | 51 | H | 75 | 100 | | | | |
| 51-33 | EXAMPLE | 51 | I | 75 | 100 | | | | |
| 51-34 | EXAMPLE | 51 | J | 75 | 100 | | | | |
| 51-35 | EXAMPLE | 51 | K | 60 | 70 | | | | |
| 51-36 | EXAMPLE | 51 | L | 60 | 70 | | | | |
| 51-37 | EXAMPLE | 51 | A | 75 | 70 | | | | |
| 51-38 | COMPARATIVE EXAMPLE | 51 | C | 50 | 70 | | | | |
| 51-39 | COMPARATIVE EXAMPLE | 51 | C | 100 | 70 | | | | |
| 51-40 | COMPARATIVE EXAMPLE | 51 | C | 75 | 60 | | | | |
| 51-41 | COMPARATIVE EXAMPLE | 51 | M | 75 | 90 | | | | |
| 51-42 | COMPARATIVE EXAMPLE | 51 | N | 75 | 90 | | | | |
| 51-43 | COMPARATIVE EXAMPLE | 51 | O | 75 | 90 | | | | |

EP 2 767 361 B1

| NO. | CATEGORY | PLATE THICKNESS (mm) | FLUX | WAVEFORM RATIO(%) | | | | | |
|---|---|---|---|---|---|---|---|---|---|
| | | | | 1ST ELECTRODE | 2ND ELECTRODE | 3RD ELECTRODE | 4TH ELECTRODE | 5TH ELECTRODE | 6TH ELECTRODE |
| 51-44 | COMPARATIVE EXAMPLE | 51 | P | 75 | 90 | | | | |
| 51-45 | COMPARATIVE EXAMPLE | 51 | Q | 75 | 90 | | | | |
| 51-46 | COMPARATIVE EXAMPLE | 51 | R | 75 | 90 | | | | |
| 51-47 | COMPARATIVE EXAMPLE | 51 | S | 75 | 90 | | | | |
| 51-48 | COMPARATIVE EXAMPLE | 51 | T | 75 | 90 | | | | |
| 51-49 | COMPARATIVE EXAMPLE | 51 | U | 75 | 90 | | | | |
| 51-50 | COMPARATIVE EXAMPLE | 51 | V | 75 | 90 | | | | |
| 51-51 | COMPARATIVE EXAMPLE | 51 | W | 75 | 90 | | | | |
| 51-52 | COMPARATIVE EXAMPLE | 51 | X | 75 | 90 | | | | |
| 51-53 | COMPARATIVE EXAMPLE | 51 | Y | 75 | 90 | | | | |

Table 14

| HEIGHT OF EXCESSIVE ENFORCEMENT | EVALUATED AS GOOD WHEN EXCESSIVE ENFORCEMENT HAS A HEIGHT OF 0 mm OR GREATER AND 5 mm OR LESS ARE. |
|---|---|
| NONDESTRUCTIVE TESTS | EVALUATED AS GOOD WHEN NO INCOMPLETE FUSION IS FOUND IN ULTRASONIC INSPECTION. |
| UNDERCUT | EVALUATED AS GOOD WHEN NO UNDERCUT IS FOUND. |
| TENSILE TEST | EVALUATED AS GOOD WHEN TENSILE STRENGTH IS 490 Mpa OR HIGHER. |
| CHARPY TEST | EVALUATED AS GOOD WHEN LOWEST VALUE OF ABSORBED ENERGY IS 40J OR HIGHER IN CHARPY TEST AT -40° C. |

Table 15

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 100-1 | EXAMPLE | 0.5 | NOT DETECTED | NO OCCURRENCE | 624 | 68 | GOOD |
| 100-2 | EXAMPLE | 1.3 | NOT DETECTED | NO OCCURRENCE | 635 | 69 | GOOD |
| 100-3 | EXAMPLE | 3.4 | NOT DETECTED | NO OCCURRENCE | 665 | 74 | GOOD |
| 100-4 | EXAMPLE | 3.5 | NOT DETECTED | NO OCCURRENCE | 628 | 81 | GOOD |
| 100-5 | EXAMPLE | 3.5 | NOT DETECTED | NO OCCURRENCE | 633 | 78 | GOOD |
| 100-6 | EXAMPLE | 3.6 | NOT DETECTED | NO OCCURRENCE | 664 | 84 | GOOD |
| 100-7 | EXAMPLE | 0.7 | NOT DETECTED | NO OCCURRENCE | 633 | 78 | GOOD |
| 100-8 | EXAMPLE | 1.4 | NOT DETECTED | NO OCCURRENCE | 651 | 85 | GOOD |
| 100-9 | EXAMPLE | 1.5 | NOT DETECTED | NO OCCURRENCE | 669 | 83 | GOOD |
| 100-10 | EXAMPLE | 1.5 | NOT DETECTED | NO OCCURRENCE | 624 | 71 | GOOD |
| 100-11 | EXAMPLE | 2.1 | NOT DETECTED | NO OCCURRENCE | 633 | 68 | GOOD |
| 100-12 | EXAMPLE | 4.1 | NOT DETECTED | NO OCCURRENCE | 627 | 77 | GOOD |
| 100-13 | EXAMPLE | 0.4 | NOT DETECTED | NO OCCURRENCE | 639 | 79 | GOOD |
| 100-14 | EXAMPLE | 1.4 | NOT DETECTED | NO OCCURRENCE | 687 | 73 | GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 100-15 | EXAMPLE | 3.4 | NOT DETECTED | NO OCCURRENCE | 645 | 70 | GOOD |
| 100-16 | EXAMPLE | 3.5 | NOT DETECTED | NO OCCURRENCE | 658 | 76 | GOOD |
| 100-17 | EXAMPLE | 3.5 | NOT DETECTED | NO OCCURRENCE | 688 | 69 | GOOD |
| 100-18 | EXAMPLE | 3.6 | NOT DETECTED | NO OCCURRENCE | 625 | 81 | GOOD |
| 100-19 | EXAMPLE | 0.8 | NOT DETECTED | NO OCCURRENCE | 645 | 78 | GOOD |
| 100-20 | EXAMPLE | 1.5 | NOT DETECTED | NO OCCURRENCE | 680 | 75 | GOOD |
| 100-21 | EXAMPLE | 1.5 | NOT DETECTED | NO OCCURRENCE | 650 | 70 | GOOD |
| 100-22 | EXAMPLE | 1.7 | NOT DETECTED | NO OCCURRENCE | 641 | 62 | GOOD |
| 100-23 | EXAMPLE | 2.2 | NOT DETECTED | NO OCCURRENCE | 633 | 78 | GOOD |
| 100-24 | EXAMPLE | 4.3 | NOT DETECTED | NO OCCURRENCE | 654 | 74 | GOOD |
| 100-25 | EXAMPLE | 0.7 | NOT DETECTED | NO OCCURRENCE | 663 | 72 | GOOD |
| 100-26 | EXAMPLE | 1.5 | NOT DETECTED | NO OCCURRENCE | 628 | 68 | GOOD |
| 100-27 | EXAMPLE | 3.4 | NOT DETECTED | NO OCCURRENCE | 635 | 66 | GOOD |
| 100-28 | EXAMPLE | 3.5 | NOT DETECTED | NO OCCURRENCE | 674 | 75 | GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 100-29 | EXAMPLE | 3.5 | NOT DETECTED | NO OCCURRENCE | 652 | 72 | GOOD |
| 100-30 | EXAMPLE | 3.5 | NOT DETECTED | NO OCCURRENCE | 647 | 62 | GOOD |
| 100-31 | EXAMPLE | 0.5 | NOT DETECTED | NO OCCURRENCE | 644 | 85 | GOOD |
| 100-32 | EXAMPLE | 1.4 | NOT DETECTED | NO OCCURRENCE | 635 | 75 | GOOD |
| 100-33 | EXAMPLE | 1.4 | NOT DETECTED | NO OCCURRENCE | 668 | 68 | GOOD |
| 100-34 | EXAMPLE | 1.5 | NOT DETECTED | NO OCCURRENCE | 671 | 76 | GOOD |
| 100-35 | EXAMPLE | 2.2 | NOT DETECTED | NO OCCURRENCE | 647 | 81 | GOOD |
| 100-36 | EXAMPLE | 4.5 | NOT DETECTED | NO OCCURRENCE | 658 | 76 | GOOD |
| 100-37 | EXAMPLE | 0.4 | NOT DETECTED | NO OCCURRENCE | 682 | 77 | GOOD |
| 100-38 | COMPARATIVE EXAMPLE | 2.4 | DETECTED | NO OCCURRENCE | 654 | 65 | NOT GOOD |
| 100-39 | COMPARATIVE EXAMPLE | 2.2 | DETECTED | NO OCCURRENCE | 652 | 71 | NOT GOOD |
| 100-40 | COMPARATIVE EXAMPLE | -0.2 | NOT DETECTED | NO OCCURRENCE | 662 | 77 | NOT GOOD |
| 100-41 | COMPARATIVE EXAMPLE | -0.5 | NOT DETECTED | NO OCCURRENCE | 661 | 72 | NOT GOOD |
| 100-42 | COMPARATIVE EXAMPLE | -0.5 | NOT DETECTED | NO OCCURRENCE | 665 | 69 | NOT GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 100-43 | COMPARATIVE EXAMPLE | -0.4 | NOT DETECTED | NO OCCURRENCE | 659 | 70 | NOT GOOD |
| 100-44 | COMPARATIVE EXAMPLE | -0.7 | NOT DETECTED | NO OCCURRENCE | 663 | 66 | NOT GOOD |
| 100-45 | COMPARATIVE EXAMPLE | -0.8 | NOT DETECTED | NO OCCURRENCE | 678 | 60 | NOT GOOD |
| 100-46 | COMPARATIVE EXAMPLE | -0.8 | NOT DETECTED | NO OCCURRENCE | 665 | 68 | NOT GOOD |
| 100-47 | COMPARATIVE EXAMPLE | 2.9 | NOT DETECTED | NO OCCURRENCE | 687 | 25 | NOT GOOD |
| 100-48 | COMPARATIVE EXAMPLE | 2.9 | NOT DETECTED | NO OCCURRENCE | 649 | 20 | NOT GOOD |
| 100-49 | COMPARATIVE EXAMPLE | 2.5 | NOT DETECTED | OCCURRED | 678 | 56 | NOT GOOD |
| 100-50 | COMPARATIVE EXAMPLE | 2.5 | NOT DETECTED | OCCURRED | 659 | 58 | NOT GOOD |
| 100-51 | COMPARATIVE EXAMPLE | 3.7 | NOT DETECTED | OCCURRED | 654 | 61 | NOT GOOD |
| 100-52 | COMPARATIVE EXAMPLE | 2.5 | NOT DETECTED | OCCURRED | 660 | 66 | NOT GOOD |
| 100-53 | COMPARATIVE EXAMPLE | 1.2 | NOT DETECTED | OCCURRED | 654 | 62 | NOT GOOD |
| 100-54 | COMPARATIVE EXAMPLE | 2.3 | NOT DETECTED | NO OCCURRENCE | 652 | 22 | NOT GOOD |
| 100-55 | COMPARATIVE EXAMPLE | 1.5 | DETECTED | NO OCCURRENCE | 667 | 55 | NOT GOOD |
| 100-56 | COMPARATIVE EXAMPLE | 2.6 | NOT DETECTED | NO OCCURRENCE | 681 | 16 | NOT GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 100-57 | COMPARATIVE EXAMPLE | 0.8 | DETECTED | NO OCCURRENCE | 650 | 68 | NOT GOOD |
| 100-58 | COMPARATIVE EXAMPLE | 2.3 | NOT DETECTED | NO OCCURRENCE | 621 | 15 | NOT GOOD |

Table 16

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 70-1 | EXAMPLE | 0.7 | NOT DETECTED | NO OCCURRENCE | 688 | 66 | GOOD |
| 70-2 | EXAMPLE | 1.2 | NOT DETECTED | NO OCCURRENCE | 625 | 84 | GOOD |
| 70-3 | EXAMPLE | 3.5 | NOT DETECTED | NO OCCURRENCE | 645 | 78 | GOOD |
| 70-4 | EXAMPLE | 3.3 | NOT DETECTED | NO OCCURRENCE | 666 | 72 | GOOD |
| 70-5 | EXAMPLE | 3.4 | NOT DETECTED | NO OCCURRENCE | 645 | 60 | GOOD |
| 70-6 | EXAMPLE | 3.5 | NOT DETECTED | NO OCCURRENCE | 624 | 75 | GOOD |
| 70-7 | EXAMPLE | 0.9 | NOT DETECTED | NO OCCURRENCE | 635 | 71 | GOOD |
| 70-8 | EXAMPLE | 1.3 | NOT DETECTED | NO OCCURRENCE | 654 | 79 | GOOD |
| 70-9 | EXAMPLE | 1.4 | NOT DETECTED | NO OCCURRENCE | 664 | 83 | GOOD |
| 70-10 | EXAMPLE | 1.5 | NOT DETECTED | NO OCCURRENCE | 658 | 81 | GOOD |
| 70-11 | EXAMPLE | 2.2 | NOT DETECTED | NO OCCURRENCE | 647 | 66 | GOOD |
| 70-12 | EXAMPLE | 4.3 | NOT DETECTED | NO OCCURRENCE | 635 | 72 | GOOD |
| 70-13 | EXAMPLE | 0.5 | NOT DETECTED | NO OCCURRENCE | 678 | 73 | GOOD |
| 70-14 | EXAMPLE | 1.6 | NOT DETECTED | NO OCCURRENCE | 628 | 70 | GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 70-15 | EXAMPLE | 3.3 | NOT DETECTED | NO OCCURRENCE | 633 | 76 | GOOD |
| 70-16 | EXAMPLE | 3.1 | NOT DETECTED | NO OCCURRENCE | 664 | 69 | GOOD |
| 70-17 | EXAMPLE | 3.4 | NOT DETECTED | NO OCCURRENCE | 641 | 85 | GOOD |
| 70-18 | EXAMPLE | 3.3 | NOT DETECTED | NO OCCURRENCE | 663 | 78 | GOOD |
| 70-19 | EXAMPLE | 0.7 | NOT DETECTED | NO OCCURRENCE | 651 | 75 | GOOD |
| 70-20 | EXAMPLE | 1.3 | NOT DETECTED | NO OCCURRENCE | 652 | 70 | GOOD |
| 70-21 | EXAMPLE | 1.4 | NOT DETECTED | NO OCCURRENCE | 647 | 72 | GOOD |
| 70-22 | EXAMPLE | 1.8 | NOT DETECTED | NO OCCURRENCE | 644 | 62 | GOOD |
| 70-23 | EXAMPLE | 2.3 | NOT DETECTED | NO OCCURRENCE | 661 | 78 | GOOD |
| 70-24 | EXAMPLE | 4.4 | NOT DETECTED | NO OCCURRENCE | 652 | 70 | GOOD |
| 70-25 | EXAMPLE | 0.9 | NOT DETECTED | NO OCCURRENCE | 635 | 66 | GOOD |
| 70-26 | EXAMPLE | 1.5 | NOT DETECTED | NO OCCURRENCE | 633 | 75 | GOOD |
| 70-27 | EXAMPLE | 3.1 | NOT DETECTED | NO OCCURRENCE | 639 | 85 | GOOD |
| 70-28 | EXAMPLE | 3.7 | NOT DETECTED | NO OCCURRENCE | 687 | 62 | GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 70-29 | EXAMPLE | 3.1 | NOT DETECTED | NO OCCURRENCE | 647 | 81 | GOOD |
| 70-30 | EXAMPLE | 3.1 | NOT DETECTED | NO OCCURRENCE | 635 | 78 | GOOD |
| 70-31 | EXAMPLE | 0.5 | NOT DETECTED | NO OCCURRENCE | 674 | 75 | GOOD |
| 70-32 | EXAMPLE | 1.2 | NOT DETECTED | NO OCCURRENCE | 650 | 68 | GOOD |
| 70-33 | EXAMPLE | 1.4 | NOT DETECTED | NO OCCURRENCE | 668 | 68 | GOOD |
| 70-34 | EXAMPLE | 1.6 | NOT DETECTED | NO OCCURRENCE | 671 | 76 | GOOD |
| 70-35 | EXAMPLE | 2.2 | NOT DETECTED | NO OCCURRENCE | 649 | 74 | GOOD |
| 70-36 | EXAMPLE | 4.5 | NOT DETECTED | NO OCCURRENCE | 650 | 61 | GOOD |
| 70-37 | EXAMPLE | 0.7 | NOT DETECTED | NO OCCURRENCE | 668 | 70 | GOOD |
| 70-38 | COMPARATIVE EXAMPLE | 2.3 | DETECTED | NO OCCURRENCE | 654 | 65 | NOT GOOD |
| 70-39 | COMPARATIVE EXAMPLE | 2.2 | DETECTED | NO OCCURRENCE | 678 | 77 | NOT GOOD |
| 70-40 | COMPARATIVE EXAMPLE | -0.4 | NOT DETECTED | NO OCCURRENCE | 665 | 72 | NOT GOOD |
| 70-41 | COMPARATIVE EXAMPLE | -0.5 | NOT DETECTED | NO OCCURRENCE | 678 | 60 | NOT GOOD |
| 70-42 | COMPARATIVE EXAMPLE | -0.7 | NOT DETECTED | NO OCCURRENCE | 659 | 70 | NOT GOOD |

(continued)

| NO. | CATEGARY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 70-43 | COMPARATIVE EXAMPLE | -0.3 | NOT DETECTED | NO OCCURRENCE | 654 | 71 | NOT GOOD |
| 70-44 | COMPARATIVE EXAMPLE | -0.3 | NOT DETECTED | NO OCCURRENCE | 687 | 71 | NOT GOOD |
| 70-45 | COMPARATIVE EXAMPLE | -0.5 | NOT DETECTED | NO OCCURRENCE | 649 | 68 | NOT GOOD |
| 70-46 | COMPARATIVE EXAMPLE | 2.8 | NOT DETECTED | NO OCCURRENCE | 652 | 22 | NOT GOOD |
| 70-47 | COMPARATIVE EXAMPLE | 2. 8 | NOT DETECTED | NO OCCURRENCE | 662 | 18 | NOT GOOD |
| 70-48 | COMPARATIVE EXAMPLE | 2.5 | NOT DETECTED | OCCURRED | 660 | 56 | NOT GOOD |
| 70-49 | COMPARATIVE EXAMPLE | 2.4 | NOT DETECTED | OCCURRED | 654 | 50 | NOT GOOD |
| 70-50 | COMPARATIVE EXAMPLE | 3. 7 | NOT DETECTED | OCCURRED | 661 | 60 | NOT GOOD |
| 70-51 | COMPARATIVE EXAMPLE | 2.5 | NOT DETECTED | OCCURRED | 665 | 64 | NOT GOOD |
| 70-52 | COMPARATIVE EXAMPLE | 1.2 | NOT DETECTED | OCCURRED | 659 | 62 | NOT GOOD |
| 70-53 | COMPARATIVE EXAMPLE | 2.3 | NOT DETECTED | NO OCCURRENCE | 652 | 20 | NOT GOOD |
| 70-54 | COMPARATIVE EXAMPLE | 1.5 | DETECTED | NO OCCURRENCE | 667 | 55 | NOT GOOD |
| 70-55 | COMPARATIVE EXAMPLE | 2.6 | NOT DETECTED | NO OCCURRENCE | 672 | 15 | NOT GOOD |
| 70-56 | COMPARATIVE EXAMPLE | 0.8 | DETECTED | NO OCCURRENCE | 650 | 68 | NOT GOOD |

Table 17

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 60-1 | EXAMPLE | 0.4 | NOT DETECTED | NO OCCURRENCE | 654 | 66 | GOOD |
| 60-2 | EXAMPLE | 1.3 | NOT DETECTED | NO OCCURRENCE | 674 | 69 | GOOD |
| 60-3 | EXAMPLE | 3.3 | NOT DETECTED | NO OCCURRENCE | 652 | 74 | GOOD |
| 60-4 | EXAMPLE | 3.4 | NOT DETECTED | NO OCCURRENCE | 642 | 68 | GOOD |
| 60-5 | EXAMPLE | 3.5 | NOT DETECTED | NO OCCURRENCE | 657 | 76 | GOOD |
| 60-6 | EXAMPLE | 3.5 | NOT DETECTED | NO OCCURRENCE | 647 | 84 | GOOD |
| 60-7 | EXAMPLE | 0.6 | NOT DETECTED | NO OCCURRENCE | 652 | 78 | GOOD |
| 60-8 | EXAMPLE | 1.3 | NOT DETECTED | NO OCCURRENCE | 667 | 85 | GOOD |
| 60-9 | EXAMPLE | 1.5 | NOT DETECTED | NO OCCURRENCE | 628 | 81 | GOOD |
| 60-10 | EXAMPLE | 1.4 | NOT DETECTED | NO OCCURRENCE | 633 | 81 | GOOD |
| 60-11 | EXAMPLE | 2.2 | NOT DETECTED | NO OCCURRENCE | 654 | 74 | GOOD |
| 60-12 | EXAMPLE | 4.5 | NOT DETECTED | NO OCCURRENCE | 638 | 71 | GOOD |
| 60-13 | EXAMPLE | 0.5 | NOT DETECTED | NO OCCURRENCE | 651 | 78 | GOOD |
| 60-14 | EXAMPLE | 1.5 | NOT DETECTED | NO OCCURRENCE | 633 | 70 | GOOD |

EP 2 767 361 B1

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 60-15 | EXAMPLE | 3.4 | NOT DETECTED | NO OCCURRENCE | 664 | 76 | GOOD |
| 60-16 | EXAMPLE | 3.5 | NOT DETECTED | NO OCCURRENCE | 669 | 79 | GOOD |
| 60-17 | EXAMPLE | .6 | NOT DETECTED | NO OCCURRENCE | 624 | 78 | GOOD |
| 60-18 | EXAMPLE | 3.7 | NOT DETECTED | NO OCCURRENCE | 645 | 73 | GOOD |
| 60-19 | EXAMPLE | 0.7 | NOT DETECTED | NO OCCURRENCE | 658 | 69 | GOOD |
| 60-20 | EXAMPLE | 1.6 | NOT DETECTED | NO OCCURRENCE | 688 | 75 | GOOD |
| 60-21 | EXAMPLE | 1.4 | NOT DETECTED | NO OCCURRENCE | 625 | 70 | GOOD |
| 60-22 | EXAMPLE | 1.8 | NOT DETECTED | NO OCCURRENCE | 645 | 68 | GOOD |
| 60-23 | EXAMPLE | 2.2 | NOT DETECTED | NO OCCURRENCE | 657 | 78 | GOOD |
| 60-24 | EXAMPLE | 4.2 | NOT DETECTED | NO OCCURRENCE | 637 | 71 | GOOD |
| 60-25 | EXAMPLE | 0.9 | NOT DETECTED | NO OCCURRENCE | 641 | 66 | GOOD |
| 60-26 | EXAMPLE | 1.6 | NOT DETECTED | NO OCCURRENCE | 663 | 75 | GOOD |
| 60-27 | EXAMPLE | 3.3 | NOT DETECTED | NO OCCURRENCE | 628 | 72 | GOOD |
| 60-28 | EXAMPLE | 3.4 | NOT DETECTED | NO OCCURRENCE | 635 | 62 | GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 60-29 | EXAMPLE | 3.1 | NOT DETECTED | NO OCCURRENCE | 644 | 72 | GOOD |
| 60-30 | EXAMPLE | 3.4 | NOT DETECTED | NO OCCURRENCE | 635 | 83 | GOOD |
| 60-31 | EXAMPLE | 0.6 | NOT DETECTED | NO OCCURRENCE | 680 | 71 | GOOD |
| 60-32 | EXAMPLE | 1.6 | NOT DETECTED | NO OCCURRENCE | 650 | 62 | GOOD |
| 60-33 | EXAMPLE | 1.5 | NOT DETECTED | NO OCCURRENCE | 668 | 85 | GOOD |
| 60-34 | EXAMPLE | 1.5 | NOT DETECTED | NO OCCURRENCE | 671 | 75 | GOOD |
| 60-35 | EXAMPLE | 2.2 | NOT DETECTED | NO OCCURRENCE | 659 | 76 | GOOD |
| 60-36 | EXAMPLE | 4.6 | NOT DETECTED | NO OCCURRENCE | 642 | 78 | GOOD |
| 60-37 | EXAMPLE | 0.7 | NOT DETECTED | NO OCCURRENCE | 682 | 77 | GOOD |
| 60-38 | COMPARATIVE EXAMPLE | 2.1 | DETECTED | NO OCCURRENCE | 654 | 74 | NOT GOOD |
| 60-39 | COMPARATIVE EXAMPLE | 2.4 | DETECTED | NO OCCURRENCE | 652 | 72 | NOT GOOD |
| 60-40 | COMPARATIVE EXAMPLE | -0.3 | NOT DETECTED | NO OCCURRENCE | 662 | 71 | NOT GOOD |
| 60-41 | COMPARATIVE EXAMPLE | -0.4 | NOT DETECTED | NO OCCURRENCE | 661 | 77 | NOT GOOD |
| 60-42 | COMPARATIVE EXAMPLE | -0.5 | NOT DETECTED | NO OCCURRENCE | 665 | 69 | NOT GOOD |

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 60-43 | COMPARATIVE EXAMPLE | -2.9 | NOT DETECTED | NO OCCURRENCE | 678 | 68 | NOT GOOD |
| 60-44 | COMPARATIVE EXAMPLE | -0.8 | NOT DETECTED | NO OCCURRENCE | 665 | 58 | NOT GOOD |
| 60-45 | COMPARATIVE EXAMPLE | 2.8 | NOT DETECTED | NO OCCURRENCE | 687 | 23 | NOT GOOD |
| 60-46 | COMPARATIVE EXAMPLE | 2.9 | NOT DETECTED | NO OCCURRENCE | 649 | 17 | NOT GOOD |
| 60-47 | COMPARATIVE EXAMPLE | 2.7 | NOT DETECTED | OCCURRED | 678 | 56 | NOT GOOD |
| 60-48 | COMPARATIVE EXAMPLE | 2.5 | NOT DETECTED | OCCURRED | 659 | 58 | NOT GOOD |
| 60-49 | COMPARATIVE EXAMPLE | 3. 7 | NOT DETECTED | OCCURRED | 654 | 61 | NOT GOOD |
| 60-50 | COMPARATIVE EXAMPLE | 1.2 | NOT DETECTED | OCCURRED | 660 | 66 | NOT GOOD |
| 60-51 | COMPARATIVE EXAMPLE | 1.1 | NOT DETECTED | OCCURRED | 654 | 62 | NOT GOOD |
| 60-52 | COMPARATIVE EXAMPLE | 2.3 | NOT DETECTED | NO OCCURRENCE | 652 | 20 | NOT GOOD |
| 60-53 | COMPARATIVE EXAMPLE | 1.6 | DETECTED | NO OCCURRENCE | 667 | 51 | NOT GOOD |
| 60-54 | COMPARATIVE EXAMPLE | 2.6 | NOT DETECTED | NO OCCURRENCE | 681 | 14 | NOT GOOD |
| 60-55 | COMPARATIVE EXAMPLE | 0.9 | DETECTED | NO OCCURRENCE | 650 | 66 | NOT GOOD |

EP 2 767 361 B1

Table 18

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 55-1 | EXAMPLE | 0.3 | NOT DETECTED | NO OCCURRENCE | 632 | 74 | GOOD |
| 55-2 | EXAMPLE | 1.5 | NOT DETECTED | NO OCCURRENCE | 647 | 71 | GOOD |
| 55-3 | EXAMPLE | 3.2 | NOT DETECTED | NO OCCURRENCE | 644 | 79 | GOOD |
| 55-4 | EXAMPLE | 3.5 | NOT DETECTED | NO OCCURRENCE | 645 | 69 | GOOD |
| 55-5 | EXAMPLE | 3.4 | NOT DETECTED | NO OCCURRENCE | 668 | 75 | GOOD |
| 55-6 | EXAMPLE | 3.3 | NOT DETECTED | NO OCCURRENCE | 671 | 72 | GOOD |
| 55-7 | EXAMPLE | 0.8 | NOT DETECTED | NO OCCURRENCE | 664 | 74 | GOOD |
| 55-8 | EXAMPLE | 1.5 | NOT DETECTED | NO OCCURRENCE | 628 | 81 | GOOD |
| 55-9 | EXAMPLE | 1.1 | NOT DETECTED | NO OCCURRENCE | 634 | 78 | GOOD |
| 55-10 | EXAMPLE | 1.6 | NOT DETECTED | NO OCCURRENCE | 669 | 70 | GOOD |
| 55-11 | EXAMPLE | 2.1 | NOT DETECTED | NO OCCURRENCE | 652 | 70 | GOOD |
| 55-12 | EXAMPLE | 4.3 | NOT DETECTED | NO OCCURRENCE | 664 | 74 | GOOD |
| 55-13 | EXAMPLE | 0.7 | NOT DETECTED | NO OCCURRENCE | 645 | 68 | GOOD |
| 55-14 | EXAMPLE | 1.3 | NOT DETECTED | NO OCCURRENCE | 665 | 75 | GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 55-15 | EXAMPLE | 3.5 | NOT DETECTED | NO OCCURRENCE | 687 | 70 | GOOD |
| 55-16 | EXAMPLE | 3.4 | NOT DETECTED | NO OCCURRENCE | 645 | 84 | GOOD |
| 55-17 | EXAMPLE | 3.1 | NOT DETECTED | NO OCCURRENCE | 639 | 73 | GOOD |
| 55-18 | EXAMPLE | 3.1 | NOT DETECTED | NO OCCURRENCE | 658 | 62 | GOOD |
| 55-19 | EXAMPLE | 0.8 | NOT DETECTED | NO OCCURRENCE | 650 | 76 | GOOD |
| 55-20 | EXAMPLE | 1.5 | NOT DETECTED | NO OCCURRENCE | 688 | 69 | GOOD |
| 55-21 | EXAMPLE | 1.1 | NOT DETECTED | NO OCCURRENCE | 625 | 81 | GOOD |
| 55-22 | EXAMPLE | 0.9 | NOT DETECTED | NO OCCURRENCE | 641 | 77 | GOOD |
| 55-23 | EXAMPLE | 2.2 | NOT DETECTED | NO OCCURRENCE | 650 | 75 | GOOD |
| 55-24 | EXAMPLE | 4.2 | NOT DETECTED | NO OCCURRENCE | 644 | 69 | GOOD |
| 55-25 | EXAMPLE | 0.7 | NOT DETECTED | NO OCCURRENCE | 623 | 70 | GOOD |
| 55-26 | EXAMPLE | 1.5 | NOT DETECTED | NO OCCURRENCE | 641 | 78 | GOOD |
| 55-27 | EXAMPLE | 3.3 | NOT DETECTED | NO OCCURRENCE | 663 | 85 | GOOD |
| 55-28 | EXAMPLE | 3.1 | NOT DETECTED | NO OCCURRENCE | 645 | 83 | GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 55-29 | EXAMPLE | 3.2 | NOT DETECTED | NO OCCURRENCE | 680 | 60 | GOOD |
| 55-30 | EXAMPLE | 3.5 | NOT DETECTED | NO OCCURRENCE | 628 | 62 | GOOD |
| 55-31 | EXAMPLE | 0.7 | NOT DETECTED | NO OCCURRENCE | 635 | 85 | GOOD |
| 55-32 | EXAMPLE | 1.2 | NOT DETECTED | NO OCCURRENCE | 674 | 75 | GOOD |
| 55-33 | EXAMPLE | 1.8 | NOT DETECTED | NO OCCURRENCE | 652 | 68 | GOOD |
| 55-34 | EXAMPLE | 1.5 | NOT DETECTED | NO OCCURRENCE | 635 | 66 | GOOD |
| 55-35 | EXAMPLE | 2.2 | NOT DETECTED | NO OCCURRENCE | 671 | 66 | GOOD |
| 55-36 | EXAMPLE | 4.5 | NOT DETECTED | NO OCCURRENCE | 653 | 63 | GOOD |
| 55-37 | EXAMPLE | 0.8 | NOT DETECTED | NO OCCURRENCE | 682 | 74 | GOOD |
| 55-38 | COMPARATIVE EXAMPLE | 2.6 | DETECTED | NO OCCURRENCE | 641 | 67 | NOT GOOD |
| 55-39 | COMPARATIVE EXAMPLE | 2.7 | DETECTED | NO OCCURRENCE | 666 | 66 | NOT GOOD |
| 55-40 | COMPARATIVE EXAMPLE | -0.5 | NOT DETECTED | NO OCCURRENCE | 651 | 71 | NOT GOOD |
| 55-41 | COMPARATIVE EXAMPLE | -0.4 | NOT DETECTED | NO OCCURRENCE | 654 | 70 | NOT GOOD |
| 55-42 | COMPARATIVE EXAMPLE | -0.9 | NOT DETECTED | NO OCCURRENCE | 687 | 65 | NOT GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mm) | TENSILE STRENGTH (MPa) | CHARPY TEST (J) | COMPREHENSIVE EVALUATION |
|---|---|---|---|---|---|---|---|
| 55-43 | COMPARATIVE EXAMPLE | -0.8 | NOT DETECTED | NO OCCURRENCE | 654 | 68 | NOT GOOD |
| 55-44 | COMPARATIVE EXAMPLE | 1.5 | NOT DETECTED | NO OCCURRENCE | 652 | 20 | NOT GOOD |
| 55-45 | COMPARATIVE EXAMPLE | 2.4 | NOT DETECTED | NO OCCURRENCE | 667 | 23 | NOT GOOD |
| 55-46 | COMPARATIVE EXAMPLE | 2.5 | NOT DETECTED | OCCURRED | 681 | 55 | NOT GOOD |
| 55-47 | COMPARATIVE EXAMPLE | 2.3 | NOT DETECTED | OCCURRED | 665 | 51 | NOT GOOD |
| 55-48 | COMPARATIVE EXAMPLE | 3.9 | NOT DETECTED | OCCURRED | 623 | 56 | NOT GOOD |
| 55-49 | COMPARATIVE EXAMPLE | 2.5 | NOT DETECTED | OCCURRED | 645 | 60 | NOT GOOD |
| 55-50 | COMPARATIVE EXAMPLE | 1.1 | NOT DETECTED | OCCURRED | 625 | 67 | NOT GOOD |
| 55-51 | COMPARATIVE EXAMPLE | 2.4 | NOT DETECTED | NO OCCURRENCE | 655 | 18 | NOT GOOD |
| 55-52 | COMPARATIVE EXAMPLE | 1.7 | DETECTED | NO OCCURRENCE | 647 | 54 | NOT GOOD |
| 55-53 | COMPARATIVE EXAMPLE | 1.7 | NOT DETECTED | NO OCCURRENCE | 632 | 14 | NOT GOOD |
| 55-54 | COMPARATIVE EXAMPLE | 0.9 | DETECTED | NO OCCURRENCE | 661 | 66 | NOT GOOD |

Table 19

| NO. | CATEGORY | HEIGHT OF EXCESSIVE ENFORCEMENT (mm) | NONDESTRUCTIVE TESTS (INCOMPLETE FUSION) | UNDERCUT (mn) | TENSILE STRENGTH (MPa) | CHARPY TEST (J) | COMPREHENSIVE EVALUATION |
|---|---|---|---|---|---|---|---|
| 51-1 | EXAMPLE | 0.5 | NOT DETECTED | NO OCCURRENCE | 624 | 68 | GOOD |
| 51-2 | EXAMPLE | 1.3 | NOT DETECTED | NO OCCURRENCE | 635 | 69 | GOOD |
| 51-3 | EXAMPLE | 3.4 | NOT DETECTED | NO OCCURRENCE | 665 | 74 | GOOD |
| 51-4 | EXAMPLE | 3.5 | NOT DETECTED | NO OCCURRENCE | 628 | 81 | GOOD |
| 51-5 | EXAMPLE | 3.5 | NOT DETECTED | NO OCCURRENCE | 633 | 78 | GOOD |
| 51-6 | EXAMPLE | 3.6 | NOT DETECTED | NO OCCURRENCE | 664 | 84 | GOOD |
| 51-7 | EXAMPLE | 0.7 | NOT DETECTED | NO OCCURRENCE | 633 | 78 | GOOD |
| 51-8 | EXAMPLE | 1.4 | NOT DETECTED | NO OCCURRENCE | 651 | 85 | GOOD |
| 51-9 | EXAMPLE | 1.5 | NOT DETECTED | NO OCCURRENCE | 669 | 83 | GOOD |
| 51-10 | EXAMPLE | 1.5 | NOT DETECTED | NO OCCURRENCE | 624 | 71 | GOOD |
| 51-11 | EXAMPLE | 2.2 | NOT DETECTED | NO OCCURRENCE | 647 | 66 | GOOD |
| 51-12 | EXAMPLE | 4.5 | NOT DETECTED | NO OCCURRENCE | 653 | 62 | GOOD |
| 51-13 | EXAMPLE | 0.4 | NOT DETECTED | NO OCCURRENCE | 639 | 79 | GOOD |
| 51-14 | EXAMPLE | 1.4 | NOT DETECTED | NO OCCURRENCE | 687 | 73 | GOOD |

(continued)

| NO. | CATEGORY | HEIGHT OF EXCESSIVE ENFORCEMENT (mm) | NONDESTRUCTIVE TESTS (INCOMPLETE FUSION) | UNDERCUT (mn) | TENSILE STRENGTH (MPa) | CHARPY TEST (J) | COMPREHENSIVE EVALUATION |
|---|---|---|---|---|---|---|---|
| 51-15 | EXAMPLE | 3.4 | NOT DETECTED | NO OCCURRENCE | 645 | 70 | GOOD |
| 51-16 | EXAMPLE | 3.5 | NOT DETECTED | NO OCCURRENCE | 658 | 76 | GOOD |
| 51-17 | EXAMPLE | 3.5 | NOT DETECTED | NO OCCURRENCE | 688 | 69 | GOOD |
| 51-18 | EXAMPLE | 3.6 | NOT DETECTED | NO OCCURRENCE | 625 | 81 | GOOD |
| 51-19 | EXAMPLE | 0.8 | NOT DETECTED | NO OCCURRENCE | 645 | 78 | GOOD |
| 51-20 | EXAMPLE | 1.5 | NOT DETECTED | NO OCCURRENCE | 680 | 75 | GOOD |
| 51-21 | EXAMPLE | 1.5 | NOT DETECTED | NO OCCURRENCE | 650 | 70 | GOOD |
| 51-22 | EXAMPLE | 1.7 | NOT DETECTED | NO OCCURRENCE | 641 | 62 | GOOD |
| 51-23 | EXAMPLE | 2.3 | NOT DETECTED | NO OCCURRENCE | 649 | 70 | GOOD |
| 51-24 | EXAMPLE | 4.6 | NOT DETECTED | NO OCCURRENCE | 642 | 63 | GOOD |
| 51-25 | EXAMPLE | 0.7 | NOT DETECTED | NO OCCURRENCE | 663 | 72 | GOOD |
| 51-26 | EXAMPLE | 1.5 | NOT DETECTED | NO OCCURRENCE | 628 | 68 | GOOD |
| 51-27 | EXAMPLE | 3.4 | NOT DETECTED | NO OCCURRENCE | 635 | 66 | GOOD |
| 51-28 | EXAMPLE | 3.5 | NOT DETECTED | NO OCCURRENCE | 674 | 75 | GOOD |

| NO. | CATEGORY | HEIGHT OF EXCESSIVE ENFORCEMENT (mm) | NONDESTRUCTIVE TESTS (INCOMPLETE FUSION) | UNDERCUT (mn) | TENSILE STRENGTH (MPa) | CHARPY TEST (J) | COMPREHENSIVE EVALUATION |
|---|---|---|---|---|---|---|---|
| 51-29 | EXAMPLE | 3.5 | NOT DETECTED | NO OCCURRENCE | 652 | 72 | GOOD |
| 51-30 | EXAMPLE | 3.4 | NOT DETECTED | NO OCCURRENCE | 647 | 62 | GOOD |
| 51-31 | EXAMPLE | 0.5 | NOT DETECTED | NO OCCURRENCE | 644 | 85 | GOOD |
| 51-32 | EXAMPLE | 1.4 | NOT DETECTED | NO OCCURRENCE | 635 | 75 | GOOD |
| 51-33 | EXAMPLE | 1.4 | NOT DETECTED | NO OCCURRENCE | 668 | 68 | GOOD |
| 51-34 | EXAMPLE | 1.5 | NOT DETECTED | NO OCCURRENCE | 671 | 76 | GOOD |
| 51-35 | EXAMPLE | 2.3 | NOT DETECTED | NO OCCURRENCE | 657 | 69 | GOOD |
| 51-36 | EXAMPLE | 4.7 | NOT DETECTED | NO OCCURRENCE | 658 | 78 | GOOD |
| 51-37 | EXAMPLE | 0.4 | NOT DETECTED | NO OCCURRENCE | 682 | 77 | GOOD |
| 51-38 | COMPARATIVE EXAMPLE | 2.4 | DETECTED | NO OCCURRENCE | 654 | 65 | NOT GOOD |
| 51-39 | COMPARATIVE EXAMPLE | 2.2 | DETECTED | NO OCCURRENCE | 652 | 71 | NOT GOOD |
| 51-40 | COMPARATIVE EXAMPLE | -0.2 | NOT DETECTED | NO OCCURRENCE | 662 | 77 | NOT GOOD |
| 51-41 | COMPARATIVE EXAMPLE | -0.8 | NOT DETECTED | NO OCCURRENCE | 678 | 60 | NOT GOOD |
| 51-42 | COMPARATIVE EXAMPLE | -0.8 | NOT DETECTED | NO OCCURRENCE | 665 | 68 | NOT GOOD |

| NO. | CATEGORY | HEIGHT OF EXCESSIVE ENFORCEMENT (mm) | NONDESTRUCTIVE TESTS (INCOMPLETE FUSION) | UNDERCUT (mn) | TENSILE STRENGTH (MPa) | CHARPY TEST (J) | COMPREHENSIVE EVALUATION |
|---|---|---|---|---|---|---|---|
| 51-43 | COMPARATIVE EXAMPLE | 2.9 | NOT DETECTED | NO OCCURRENCE | 687 | 25 | NOT GOOD |
| 51-44 | COMPARATIVE EXAMPLE | 2.9 | NOT DETECTED | NO OCCURRENCE | 649 | 20 | NOT GOOD |
| 51-45 | COMPARATIVE EXAMPLE | 2.5 | NOT DETECTED | OCCURRED | 678 | 56 | NOT GOOD |
| 51-46 | COMPARATIVE EXAMPLE | 2.5 | NOT DETECTED | OCCURRED | 659 | 58 | NOT GOOD |
| 51-47 | COMPARATIVE EXAMPLE | 3. 7 | NOT DETECTED | OCCURRED | 654 | 61 | NOT GOOD |
| 51-48 | COMPARATIVE EXAMPLE | 2.5 | NOT DETECTED | OCCURRED | 660 | 66 | NOT GOOD NOT GOOD |
| 51-49 | COMPARATIVE EXAMPLE | 1.2 | NOT DETECTED | OCCURRED | 654 | 62 | NOT GOOD |
| 51-50 | COMPARATIVE EXAMPLE | 2.3 | NOT DETECTED | NO OCCURRENCE | 652 | 22 | NOT GOOD |
| 51-51 | COMPARATIVE EXAMPLE | 1.5 | DETECTED | NO OCCURRENCE | 667 | 55 | NOT GOOD |
| 51-52 | COMPARATIVE EXAMPLE | 2.6 | NOT DETECTED | NO OCCURRENCE | 681 | 16 | NOT GOOD |
| 51-53 | COMPARATIVE EXAMPLE | 0.8 | DETECTED | NO OCCURRENCE | 650 | 68 | NOT GOOD |

EP 2 767 361 B1

55

[Industrial Applicability]

According to the present invention, it is possible to highly efficiently weld a double V groove of a steel plate and to obtain weld metal 8 excellent in toughness also at low temperatures. Therefore, it is possible to efficiently manufacture the base of wind power generation facilities in cold areas, contributing significantly to the proliferation of renewable energy.

[Reference Signs List]

| | |
|---|---|
| 1: | first electrode |
| 2: | second electrode |
| 3: | third electrode |
| 4: | fourth electrode |
| 5: | fifth electrode |
| 6: | sixth electrode |
| 7: | electrode |
| 8: | weld metal |
| 9: | steel plate |
| a, b: | amplitude of current waveform |
| c, d: | width of current waveform (cycle) |

**Claims**

1.  A method of a submerged arc welding, comprising:

    a machining step of machining a double V groove in a pair of steels with a plate thickness of over 50 mm and 100 mm or less; and
    a welding step of performing a one-run welding with a flux on the pair of steels from a front surface and a rear surface by multi electrode submerged arc welding using two or more electrodes and six or less electrodes,

    wherein, in the welding step, a welding current for a first electrode is an alternating current with a waveform ratio of 60% or greater and 90% or less, and welding currents for other electrodes are an alternating current with a waveform ratio of 70% or greater, or a negative direct current, and
    wherein the flux consists of, in a mass ratio to a total mass of the flux:

    $Al_2O_3$: 10% or greater and 50% or less; and
    $SiO_2$: 16% or greater and 30% or less, and
    further:

    one or more of MgO, $TiO_2$, $CaF_2$, and MnO, a total of which is 10% or greater and 60% or less, the MgO being limited to 40% or less, the $TiO_2$ being limited to 20% or less, the $CaF_2$ being limited to 30% or less, and the MnO being limited to 20% or less; and optionally metal powder(s) of Si, Mn, Al, Ti, Mo, Cu, Ni, Cr, or V; and further optionally iron powder.

2.  The method of the submerged arc welding according to Claim 1,
    wherein the welding current for the first electrode is 2500 A or higher.

3.  The method of the submerged arc welding according to Claim 1 or 2,
    wherein, as profiles of a plurality of grooves formed between the pair of steels, a height of a root face is 5 mm or greater, and is 25% or less of the plate thickness.

4.  The method of the submerged arc welding according to any one of Claims 1 to 3,
    wherein a groove angle of the double V groove is 30° or greater and 50° or less.

**Patentansprüche**

1. Ein Unter-Pulver-Schweißverfahren, umfassend:

einen Bearbeitungsschritt des Bearbeitens einer Doppel-V-Fuge in einem Stahlpaar mit einer Plattendicke von über 50 mm und 100 mm oder weniger; und
einen Schweißschritt des Ausführens eines Schweißens in einem Durchgang mit einem Schweißpulver auf dem Stahlpaar von einer Vorderseite und einer Rückseite durch Mehr-Elektroden-Unter-Pulver-Schweißen unter Verwendung von zwei oder mehr Elektroden und sechs oder weniger Elektroden,

wobei, bei dem Schweißschritt, ein Schweißstrom für eine erste Elektrode ein Wechselstrom mit einem Wellenformverhältnis von 60% oder mehr und 90% oder weniger ist und Schweißströme für andere Elektroden ein Wechselstrom mit einem Wellenformverhältnis von 70% oder mehr oder ein negativer Gleichstrom sind und
wobei das Schweißpulver in einem Massenanteil zu einer Gesamtmasse des Schweißpulvers aus:

$Al_2O_3$: 10% oder mehr und 50% oder weniger; und
$SiO_2$: 16% oder mehr und 30% oder weniger und
ferner:

einem oder mehreren von MgO, $TiO_2$, $CaF_2$ und MnO, wobei die Gesamtheit davon 10% oder mehr und 60% oder weniger ausmacht, wobei das MgO auf 40% oder weniger begrenzt ist, wobei das $TiO_2$ auf 20% oder weniger begrenzt ist, wobei das $CaF_2$ auf 30% oder weniger begrenzt ist und wobei das MnO auf 20% oder weniger begrenzt ist; und gegebenenfalls Metallpulver aus Si, Mn, Al, Ti, Mo, Cu, Ni, Cr oder V; und ferner gegebenenfalls Eisenpulver besteht.

2. Das Unter-Pulver-Schweißverfahren gemäß Anspruch 1,
wobei der Schweißstrom für die erste Elektrode 2500 A oder mehr beträgt.

3. Das Unter-Pulver-Schweißverfahren gemäß Anspruch 1 oder 2,
wobei, als Profile mehrerer Fugen, die zwischen den Stahlpaaren gebildet wurden, eine Höhe der Stegflanke 5 mm oder mehr beträgt und 25% oder weniger der Plattendicke beträgt.

4. Das Unter-Pulver-Schweißverfahren gemäß einem der Ansprüche 1 bis 3,
wobei ein Fugenwinkel der Doppel-V-Fuge 30° oder mehr und 50° oder weniger beträgt.


**Revendications**

1. Méthode de soudage à l'arc immergé, comprenant :

une étape d'usinage consistant à usiner une double rainure en V dans une paire d'aciers ayant une épaisseur de tôle supérieure à 50 mm et 100 mm ou moins ; et
une étape de soudage consistant à réaliser une soudure en une passe avec un flux sur la paire d'aciers depuis une surface avant et une surface arrière par soudage à arc immergé multi-électrodes en utilisant deux électrodes ou plus et six électrodes ou moins,

dans laquelle, au cours de l'étape de soudage, un courant de soudage pour une première électrode est un courant alternatif ayant un rapport de forme d'onde de 60 % ou plus et 90 % ou moins, et les courants de soudage pour les autres électrodes sont des courants alternatifs ayant un rapport de forme d'onde de 70 % ou plus, ou un courant continu négatif, et
dans laquelle le flux se compose, en un rapport en poids par rapport au poids total du flux :

$Al_2O_3$ : 10 % ou plus et 50 % ou moins ; et
$SiO_2$ : 16 % ou plus et 30 % ou moins ; et
en outre :

un ou plusieurs éléments parmi MgO, $TiO_2$, $CaF_2$, et MnO, dont le total est de 10 % ou plus et 60 % ou moins, le MgO étant limité à 40 % ou moins, le $TiO_2$ étant limité à 20 % ou moins, le $CaF_2$ étant limité à 30 % ou moins, et le MnO étant limité à 20 % ou moins ; et éventuellement une ou des poudres métalliques de Si, Mn, Al, Ti, Mo, Cu, Ni, Cr ou V ; et en outre éventuellement de la poudre de fer.

2. Méthode de soudage à l'arc immergé selon la revendication 1, dans laquelle le courant de soudage pour la première électrode est de 2 500 A ou plus.

3. Méthode de soudage à l'arc immergé selon la revendication 1 ou 2, dans laquelle, comme profils d'une pluralité de rainures formées entre la paire d'aciers, une hauteur d'une face de la base est supérieure à 5 mm et a 25 % ou moins de l'épaisseur de la tôle.

4. Méthode de soudage à l'arc immergé selon l'une quelconque des revendications 1 à 3, dans laquelle un angle de rainure de la double rainure en V est de 30° ou plus et de 50° ou moins.

## FIG. 1

## FIG. 2

## FIG. 3

## FIG. 4

FIG. 5

FIG. 6A

8

9

8

FIG. 6B

8

9

8

FIG. 7

FIG. 8

# FIG. 9

# FIG. 10

## FIG. 11

WAVEFORM RATIO OF 2ND TO 6TH ELECTRODES ON
SIX ELECTRODES WELDING SYSTEM (%)

## FIG. 12

WAVEFORM RATIO OF 2ND TO 4TH ELECTRODES ON
FOUR ELECTRODES WELDING SYSTEM (%)

## FIG. 13

## FIG. 14

FIG. 15

FIG. 16

FIG. 17

FIG. 18

FIG. 19

5mm

9

8

5mm

8

CHARPY TEST SPECIMEN

ROUND BAR TENSILE TEST SPECIMEN
AND ANALYSIS SAMPLE

FIG. 20

CROSS SECTIONAL VIEW

DIRECTION OF WELDING

SIDE VIEW

**EP 2 767 361 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011249928 A
- JP H09206946 B
- JP H09277083 B
- JP 2009241128 A
- JP 2009195957 A
- JP 2004143556 A
- JP 2005193299 A
- JP 2011200920 A
- JP S62045475 A